# EUROPEAN PATENT APPLICATION

(11) **EP 4 109 894 A1**
(43) Date of publication of application: **28.12.2022**
(21) Application number: 20922912.9
(22) Date of filing: 03.03.2020
(51) Int. Cl.: H04N 9/04

(54) **IMAGE SENSOR AND IMAGE SENSITIZATION METHOD**

(71) Applicant: Huawei Technologies Co., Ltd., Shenzhen, Guangdong 518129, (CN)
(72) Inventor: CHEN, Jianpei, Shenzhen, Guangdong 518129 (CN); LAN, Jing, Shenzhen, Guangdong 518129 (CN); XU, Cong, Shenzhen, Guangdong 518129 (CN); GUO, Jiacheng, Shenzhen, Guangdong 518129 (CN); NISHIZAWA, Masato, Shenzhen, Guangdong 518129 (CN)
(74) Representative: Gill Jennings & Every LLP
(86) International application number: PCT/CN2020/077652
(87) International publication number: WO 2021/174425

(57) **Abstract**

This application provides an image sensor (702) and image light sensing method. The image sensor (702) includes a red pixel (R), a green pixel (G), a blue pixel (B), and an invisible light pixel, where the red pixel (R), the green pixel (G), and the blue pixel (B) are large pixels, the invisible light pixel is a small pixel, and a light sensing area of the large pixel is greater than that of the small pixel. The red pixel (R), the green pixel (G), and the blue pixel (B) are arranged in a Bayer format. In this application, when color information is sufficient, light crosstalk caused by the small pixel to the large pixel can be reduced, and therefore a signal-to-noise ratio of the large pixel can be improved.

## Description

### TECHNICAL FIELD

This application relates to image processing technologies, and in particular, to an image sensor and image light sensing method.

### BACKGROUND

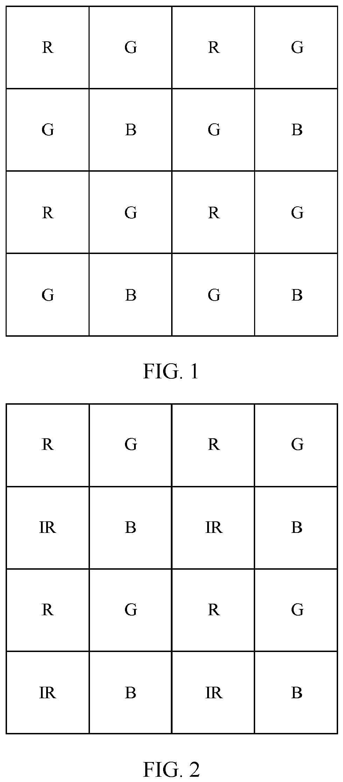

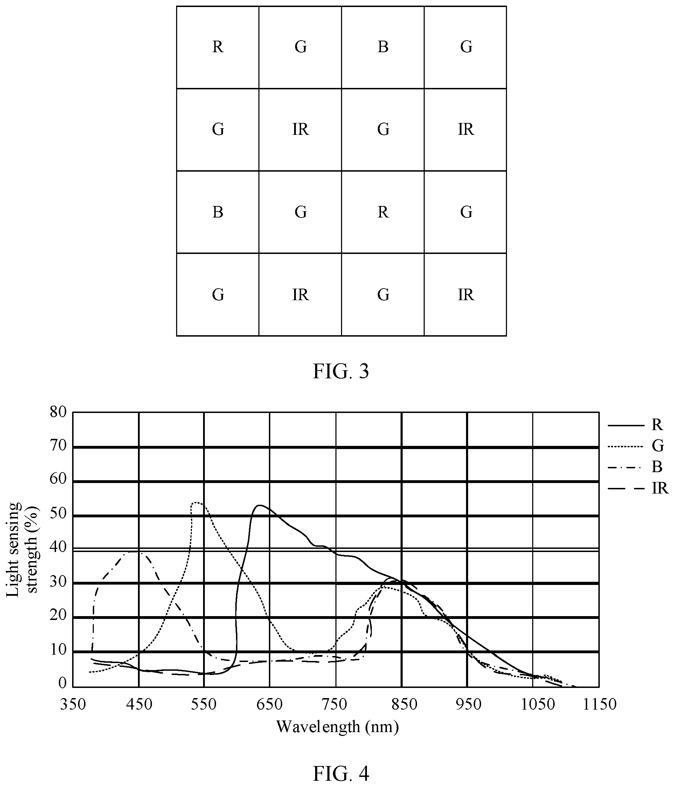

A color filter array (Color Filter Array, CFA) of a conventional Bayer red green blue sensor (Red Green Blue Sensor, RGB Sensor) includes three pixels: R, G, and B, and pixels at different positions are sensitive to only one color of R, G, and B, and arranged to form a mosaic color image. FIG. 1 is a schematic diagram of a typical Bayer RGB CFA. The array is arranged in a 2x2 array. In the minimum repetition unit, a first row includes the R pixel and the G pixel, and a second row includes the G pixel and the B pixel. Based on the RGB sensor, a red green blue infrared sensor (RGB-infrared, RGBIR Sensor) reduces a portion of the R pixel, the G pixel, or the B pixel, adds an IR pixel, and forms a mosaic color image. FIG. 2 is a schematic diagram of a typical RGBIR CFA. As shown in FIG. 2, the array is arranged in a 2x2 array. In the minimum repetition unit, a first row includes the R pixel and the G pixel, and a second row includes the IR pixel and the B pixel. FIG. 3 is a schematic diagram of a typical RGBIR CFA. As shown in FIG. 3, the array is arranged in a 4x4 array. In the minimum repetition unit, a first row includes the R pixel, the G pixel, the B pixel, and the G pixel, a second row includes the G pixel, the IR pixel, the G pixel, and the IR pixel, a third row includes the B pixel, the G pixel, the R pixel, and the G pixel, and a fourth row includes the G pixel, the IR pixel, the G pixel, and the IR pixel.

A related technology provides a design solution of an image sensor capable of separating visible light (including red light, green light, and blue light) from infrared light during light sensing. After an IR cut-off filter layer is added to pixel units of three colors: red, green, and blue, an IR component may be filtered out from a light sensing result that is obtained by light sensing of visible light pixels (including the R pixel, the G pixel, and the B pixel).

According to the foregoing method, although IR signals in visible light pixels are filtered out, crosstalk of infrared light in an adjacent IR pixel still interferes with the visible light pixels, affecting a signal-to-noise ratio of the visible light pixels.

### SUMMARY

This application provides an image sensor and an image light sensing method, to reduce light crosstalk caused by a small pixel to a large pixel and improve a signal-to-noise ratio of the large pixel when color information is sufficient.

According to a first aspect, this application provides an image sensor. The image sensor includes a red pixel, a green pixel, a blue pixel, and an invisible light pixel. The red pixel, the green pixel, and the blue pixel are large pixels, the invisible light pixel is a small pixel, and a light sensing area of the large pixel is greater than that of the small pixel. The red pixel, the green pixel, and the blue pixel are arranged in a Bayer format.

The image sensor provided in this application uses a pixel array including the large pixel and the small pixel. The large pixel is in a Bayer RGB CFA format that is consistent with a conventional RGB sensor, and the light sensing area of the large pixel is greater than that of the small pixel, so that color information obtained based on the large pixel may not be reduced, resolution of a visible light image may not be decreased, and an existing Demosaic algorithm may be directly reused and seamlessly embedded into an existing image signal processor (Image Signal Processor, ISP). In addition, the light sensing area of the large pixel is greater than that of the small pixel. Correspondingly, light sensitivity of the large pixel is greater than that of the small pixel. Therefore, a light pixel may be designed as the large pixel, this improves imaging quality of visible light, to obtain more accurate color information. In addition, an area of the small pixel (the invisible light pixel) that is adjacent to the large pixel (a visible light pixel) is small. This greatly reduces a contact range between the invisible light pixel and the visible light pixel, reduces light crosstalk that is caused by the invisible light pixel to the visible light pixel, and reduces interference that is caused by a light sensing result of the invisible light pixel to color information obtained by the visible light pixel. Therefore, a signal-to-noise ratio of color information of the visible light image is further improved. Further, when an infrared pixel or a white pixel is designed as the small pixel, obtaining of detail information may not be affected, and when the invisible light pixel is the infrared pixel, infrared light may be supplemented in an infrared night vision scenario. Therefore, when the infrared pixel is designed as the small pixel, an infrared imaging result may not be affected, and when the invisible light pixel is the white pixel, a spectral response curve of a white light pixel is wide and a light sensing capability is strong. Therefore, when the white pixel is designed as the small pixel, an imaging result of the white light may not be affected. In this application, color information of an image may be obtained based on the visible light pixel, detail information of the image may be obtained based on the invisible light pixel, and the color information is fused with the detail information to obtain a final image. According to the image sensor provided in this application, more accurate color information may be obtained based on the large pixel, detail information that is obtained based on the small pixel may not be affected, so that details and color performance of the fused image are greatly improved. In addition, the visible light pixel is in a Bayer RGB CFA format that is consistent with the conventional RGB sensor. Therefore, the visible light image is a full-resolution image, and an invisible light pixel that is used as an IR pixel or a W pixel may be placed between a pixel row and a pixel column of the visible light pixel, to form a pixel array in which four visible light pixels surround one invisible light pixel and four invisible light pixels surround one visible light pixel. Therefore, the obtained invisible light image is also a full-resolution image, and design of the large pixel and the small pixel does not affect the color information of the visible light image and details of the invisible light image.

In a possible implementation, the invisible light pixel includes an infrared pixel or a white pixel; the white pixel is used to sense white light; and the white light includes red light, green light, blue light, and infrared light.

In a possible implementation, four large pixels surround the one small pixel, and four small pixels surround the one large pixel.

In a possible implementation, areas of the large pixel and the small pixel are set based on crosstalk precision of the image sensor.

Generally, a distance between center points of adjacent pixels in the pixel array is fixed, and the distance depends on a size, a process, and the like of the image sensor. On this basis, the areas of the large pixel and the small pixel may be set based on the crosstalk precision of the image sensor. To reduce crosstalk, it is expected that a ratio of the area of the large pixel to that of the small pixel is as large as possible. To improve the light sensitivity, a larger area of the large pixel indicates obtained more accurate color information of the image, and a larger area of the small pixel indicates obtained more detail information of the image. Therefore, although maximum areas of the large pixel and the small pixel are limited, it is still expected that the areas of the large pixel and the small pixel are as large as possible. Further, the areas of the large pixel and the small pixel may be preset to achieve a balance between factors such as precision of the image sensor, a requirement of illuminance, and luminous intensity of an infrared illuminator. Optionally, setting the areas of the large pixel and the small pixel may alternatively be setting a spacing between adjacent sides of the large pixel and the small pixel. If the areas of the large pixel and the small pixel are large, the spacing between the adjacent sides is small. Because the foregoing factors are considered when the areas of the large pixel and the small pixel or the spacing between the adjacent sides of the large pixel and the small pixel is set, based on the large pixel and the small pixel that are set, not only color information with high resolution may be obtained, but also sufficient detail information may be supplemented. This improves imaging quality of a final image obtained by the image sensor.

In a possible implementation, the large pixel and the small pixel are regular polygons or circles.

In a possible implementation, the red pixel, the green pixel, and the blue pixel correspond to an infrared cut-off filter layer. The infrared cut-off filter layer is used to cut off an optical signal whose wavelength is greater than a first preset wavelength, and the optical signal whose wavelength is greater than the first preset wavelength includes the infrared light.

According to the image sensor provided in this application, the infrared cut-off filter layer is coated on a microlens corresponding to the R pixel, the G pixel, and the B pixel, to cut off the infrared light from reaching the R pixel, the G pixel, and the B pixel, and remove an IR signal from a light sensing result of the visible light pixel. Therefore, a color in the light sensing result is more accurate, and this improves light sensing effect of the sensor. Further, in this application, the infrared cut-off filter layer may be coated on the microlens by using a coating technology. Therefore, a complex mechanical structure does not need to be added. In addition, a structure of a pixel under the microlens is not changed. A comparatively simple and stable internal structure of the pixel helps control a problem, such as a chief ray angle (Chief Ray Angle, CRA), that affects imaging, thereby improving the light sensing effect of the image sensor while maintaining a stable structure of the pixel.

In a possible implementation, the first preset wavelength is 650 nm. In this case, the infrared cut-off filter cuts off all light rays whose wavelengths fall outside a visible light range, to ensure that all infrared light falling inside the wavelength range cannot enter the red pixel, the green pixel, and the blue pixel.

In a possible implementation, the sensor further includes a light filter layer, where the light filter layer includes a red filter layer, a green filter layer, and a blue filter layer. Each red pixel corresponds to one red filter layer, and the red filter layer is used to allow red light and infrared light in a first wavelength range to pass through. Each green pixel corresponds to one green filter layer, and the green filter layer is used to allow green light and infrared light in a second wavelength range to pass through. Each blue pixel corresponds to one blue filter layer, and the blue filter layer is used to allow blue light and infrared light in a third wavelength range to pass through. Wavelengths of the infrared light in the first wavelength range, the infrared light in the second wavelength range, and the infrared light in the third wavelength range are greater than the first preset wavelength. When the invisible light pixel is the infrared pixel, the light filter layer further includes an infrared filter layer. Each infrared pixel corresponds to one infrared filter layer, and the infrared filter layer is used to allow infrared light in a specific wavelength range to pass through. When the invisible light pixel is the white pixel, the light filter layer further includes an all-pass filter layer or a dual-pass filter layer. Each white pixel corresponds to one all-pass filter layer or one dual-pass filter layer, the all-pass filter layer is used to allow light in a full band range to pass through, and the dual-pass filter layer is used to allow red light, green light, blue light, and the infrared light in the specific wavelength range to pass through.

In a possible implementation, the infrared cut-off filter layer and/or the light filter layer are/is coated on a microlens of a corresponding pixel.

According to the image sensor provided in this application, the red filter layer and the infrared cut-off filter layer are coated on the R pixel to filter out an IR component in a light sensing result of the R pixel, so that the R pixel may sense only the red light. Correspondingly, the green filter layer and the infrared cut-off filter layer are coated on the G pixel, and the blue filter layer and the infrared cut-off filter layer are coated on the B pixel to filter out an IR component in a light sensing result of the G pixel and the B pixel, so that the G pixel may sense only the green light, and B pixel may sense only the blue light. The infrared filter layer is coated on the IR pixel, so that the IR pixel may sense only the infrared light. Alternatively, the all-pass filter layer or the dual-pass filter layer is coated on the W pixel, so that the W pixel may sense only the white light. Therefore, color accuracy of a light sensing result obtained by the image sensor is greatly improved.

It should be understood that the red filter layer is located above or below the infrared cut-off filter layer, the green filter layer is located above or below the infrared cut-off filter layer, and the blue filter layer is located above or below the infrared cut-off filter layer. In this application, a sequence of coating the infrared cut-off filter layer, and the red filter layer, the green filter layer, or the blue filter layer on the microlens is not limited.

According to the image sensor provided in this application, the red filter layer and the infrared cut-off filter layer are coated on the microlens of the red pixel, the green filter layer and the infrared cut-off filter layer are coated on the microlens of the green pixel, the blue filter layer and the infrared cut-off filter layer are coated on the microlens of the blue pixel, and the infrared filter layer is coated on the microlens of the infrared pixel. A coating position relationship between the infrared cut-off filter layer and the red filter layer, the green filter layer, or the blue filter layer on the microlens is not limited. The red filter layer, the green filter layer, and the blue filter layer may be separately coated on the infrared cut-off filter layer. Alternatively, the infrared cut-off filter layer may be coated on the red filter layer, the green filter layer, or the blue filter layer provided that a light ray first passes through the infrared cut-off filter layer and a light filter layer of any visible light component before reaching the microlens.

In a possible implementation, the infrared cut-off filter layer is coated on the microlens, and the red filter layer, the green filter layer, and the blue filter layer are coated on inner sides of the microlenses or are respectively disposed inside the red pixel, the green pixel, and the blue pixel. In a possible implementation, the red filter layer, the green filter layer, and the blue filter layer are coated on the microlenses, and the infrared cut-off filter layer is coated on an inner side of the microlens or is disposed inside the red pixel, the green pixel, and the blue pixel.

In a possible implementation, the sensor further includes a logic control circuit, configured to separately control exposure time of the large pixel and the small pixel.

According to the image sensor provided in this application, the exposure time of the large pixel and the small pixel is separately controlled. For example, when the infrared light is excessively strong and the visible light is excessively weak, the exposure time of the large pixel may be increased, and the exposure time of the small pixel may be reduced, so that imaging brightness of the visible light and the infrared light (the infrared light or the white light) tends to be balanced. This resolves a problem of exposure imbalance that easily occurs when the infrared light or the visible light is dominant, improves a dynamic range of light sensing of the image sensor, and meets user requirements on indicators such as a definition and a signal-to-noise ratio.

In a possible implementation, the logic control circuit includes a first control line and a second control line. The large pixel is coupled to the first control line, and the small pixel is coupled to the second control line. The logic control circuit is specifically configured to: control an exposure start time point of the large pixel based on the first control line, and control an exposure start time point of the small pixel based on the second control line.

In a possible implementation, the logic control circuit is further configured to control, based on the first control line and the second control line, the exposure time of the large pixel and the small pixel to meet a preset ratio.

For example, the first control line outputs a first control signal, and the second control line outputs a second control signal. When a first effective transition edge of the first control signal arrives, the large pixel starts to be exposed. When a second effective transition edge of the second control signal arrives, the small pixel starts to be exposed. Arrival moments of the first effective transition edge and the second effective transition edge are set, to enable the exposure time of the large pixel and the small pixel to meet the preset ratio.

According to the image sensor provided in this application, the arrival moments of the effective transition edges of the respective control signals of the large pixel and the small pixel may be set, to enable the exposure time of the large pixel and the small pixel to meet the preset ratio. For example, when a ratio of the exposure time of the large pixel to the exposure time of the small pixel is 2:1, an exposure result has a higher definition and a higher signal-to-noise ratio. In this way, the control signal of the large pixel transits first, and the control signal of the small pixel transits later, and it is ensured that a time difference between transition time points of the two pixels enables exposure time of a visible light signal and an infrared light signal to meet the preset ratio. Therefore, the light sensing effect of the image sensor may be more precisely controlled by precisely setting the ratio of the exposure time of the large pixel to the exposure time of the small pixel. For example, the effective transition edge may be a falling edge of a high-level signal, a rising edge of a low-level signal, a rising edge of a high-level signal, or a falling edge of a low-level signal.

In a possible implementation, the sensor further includes a light filter, configured to filter out ultraviolet light and infrared light whose wavelength is greater than a second preset wavelength, where the second preset wavelength is greater than the first preset wavelength and any wavelength that is in the specific wavelength range.

According to the image sensor provided in this application, the light filter may filter out far-infrared light with a comparatively long wavelength and ultraviolet light with a comparatively short wavelength in natural light rays, to prevent the far-infrared light and the ultraviolet light from affecting a light sensing characteristic of a photosensitive component.

In a possible implementation, the image sensor further includes a charge readout module, and each pixel in the pixel array includes a photosensitive component. The photosensitive component is configured to convert a light ray into charges, and the charge readout module outputs charges accumulated by the photosensitive component, to obtain a light sensing result.

In a possible implementation, the sensor further includes a logic control circuit, configured to independently control exposure time of the red pixel, the green pixel, the blue pixel, and the infrared pixel.

According to the image sensor provided in this application, the exposure time of the R pixel, the G pixel, the B pixel, and the IR pixel is separately controlled. When some scenarios have a comparatively high requirement on light sensing results of the R pixel and the G pixel, and expect to reduce light sensing results of the B pixel and the IR pixel, the exposure time of the four pixels may be flexibly controlled, to enhance light sensing effects of the R pixel and the G pixel and weaken light sensing effects of the B pixel and the IR pixel, so that a final light sensing result better meets the scenario requirements. Therefore, this further improves the dynamic range of light sensing of the image sensor, and provides a light sensing result that better meets user requirements on indicators such as a definition and a signal-to-noise ratio.

In a possible implementation, the logic control circuit includes a first control line, a second control line, a third control line, and a fourth control line. The red pixel in the pixel array is coupled to the first control line, the green pixel in the pixel array is coupled to the second control line, the blue pixel in the pixel array is coupled to the third control line, and the infrared pixel in the pixel array is coupled to the fourth control line. The logic control circuit is specifically configured to: control an exposure start time point of the red pixel based on the first control line; control an exposure start time point of the green pixel based on the second control line; control an exposure start time point of the blue pixel based on the third control line; and control an exposure start time point of the infrared pixel based on the fourth control line.

In a possible implementation, the logic control circuit is further configured to control, based on the first control line, the second control line, the third control line, and the fourth control line, the exposure time of the red pixel, the green pixel, the blue pixel, and the infrared pixel to meet the preset ratio.

According to the image sensor provided in this application, the exposure time of the R pixel, the G pixel, the B pixel, and the IR pixel may be preset to meet the preset ratio, to precisely control the light sensing effect of the image sensor.

For example, the first control line outputs the first control signal, the second control line outputs the second control signal, the third control line outputs a third control signal, and the fourth control line outputs a fourth control signal. When the first effective transition edge of the first control signal arrives, the red pixel starts to be exposed. When the second effective transition edge of the second control signal arrives, the green pixel starts to be exposed. When a third effective transition edge of the third control signal arrives, the green pixel starts to be exposed. When a fourth effective transition edge of the fourth control signal arrives, the infrared pixel starts to be exposed. Arrival moments of the first effective transition edge, the second effective transition edge, the third effective transition edge, and the fourth effective transition edge are set, to enable the exposure time of the R pixel, the G pixel, the B pixel, and the IR pixel to meet the preset ratio.

In a possible implementation, the sensor further includes: a row coordinate control line, a column coordinate control line, and an exposure start control line. Each pixel in the pixel array is coupled to a row coordinate control line and a column coordinate control line of the pixel. The exposure start control line includes a plurality of branches, and each branch corresponds to one pixel. When control signals outputted by the row coordinate control line and the column coordinate control line of a target pixel are both at effective levels, a branch of the exposure start control line corresponding to the target pixel outputs the control signal to control an exposure start time point of the target pixel, where the target pixel is any pixel in the pixel array.

According to the image sensor provided in this application, light sensing time of each pixel may be separately controlled. In some scenarios in which a pixel in a target area needs to be enhanced, only exposure time of the pixel in the target area may be increased. This further improves light sensing of the sensor, and further meets a user requirement on a light sensing result.

In a possible implementation, the sensor further includes an exposure end control signal, used to uniformly control exposure end time points of all pixels in the pixel array.

In a possible implementation, the logic control circuit includes a first control variable x and a second control variable y. When x and y meet a coordinate condition of the visible light pixel, a reset signal of the logic control circuit is outputted to the first control line as the first control signal. When x and y meet a coordinate condition of the IR pixel, a reset signal of the logic control circuit is outputted to the second control line as the second control signal.

In a possible implementation, the logic control circuit includes a first control variable x and a second control variable y. When x and y meet a coordinate condition of the R pixel, a reset signal of the logic control circuit is outputted to the first control line as the first control signal. When x and y meet a coordinate condition of the G pixel, a reset signal of the logic control circuit is outputted to the second control line as the second control signal. When x and y meet a coordinate condition of the B pixel, a reset signal of the logic control circuit is outputted to the third control line as the third control signal. When x and y meet a coordinate condition of the IR pixel, a reset signal of the logic control circuit is outputted to the fourth control line as the fourth control signal.

According to a second aspect, this application provides an image light sensing method, where the method is applied to an image sensor. The image sensor includes a red pixel, a green pixel, a blue pixel, and an invisible light pixel, where the red pixel, the green pixel, and the blue pixel are large pixels, the invisible light pixel is a small pixel, and a light sensing area of the large pixel is greater than that of the small pixel; the red pixel, the green pixel, and the blue pixel are arranged in a Bayer format. The method includes: sensing the red light based on the red pixel; sensing the green light based on the green pixel; sensing the blue light based on the blue pixel; and sensing infrared light or white light based on the small pixel.

In a possible implementation, the invisible light pixel includes an infrared pixel or a white pixel; and the white pixel is used to sense white light. The white light includes red light, green light, blue light, and infrared light. The method specifically includes: sensing the infrared light based on the infrared pixel, or sensing the white light based on the white pixel.

In a possible implementation, four large pixels surround the one small pixel, and four small pixels surround the one large pixel.

In a possible implementation, areas of the large pixel and the small pixel are set based on crosstalk precision of the image sensor.

In a possible implementation, the large pixel and the small pixel are regular polygons or circles.

In a possible implementation, the image sensor further includes an infrared cut-off filter layer. Each large pixel corresponds to one infrared cut-off filter layer, the infrared cut-off filter layer is used to cut off an optical signal whose wavelength is greater than a first preset wavelength, and the optical signal whose wavelength is greater than the first preset wavelength includes the infrared light. The method further includes: A light ray passes through the infrared cut-off filter layer to reach the large pixel.

In a possible implementation, the image sensor further includes a light filter layer. The light filter layer includes a red filter layer, a green filter layer, and a blue filter layer. Each red pixel corresponds to one red filter layer, and the red filter layer is used to allow the red light and infrared light in a first wavelength range to pass through. Each green pixel corresponds to one green filter layer, and the green filter layer is used to allow the green light and infrared light in a second wavelength range to pass through. Each blue pixel corresponds to one blue filter layer, and the blue filter layer is used to allow the blue light and infrared light in a third wavelength range to pass through. Wavelengths of the infrared light in the first wavelength range, the infrared light in the second wavelength range, and the infrared light in the third wavelength range are greater than the first preset wavelength. When the invisible light pixel is the infrared pixel, the light filter layer further includes an infrared filter layer. Each infrared pixel corresponds to one infrared filter layer, and the infrared filter layer is used to allow infrared light in a specific wavelength range to pass through. When the invisible light pixel is the white pixel, the light filter layer further includes an all-pass filter layer or a dual-pass filter layer. Each white pixel corresponds to one all-pass filter layer or one dual-pass filter layer, the all-pass filter layer is used to allow light in a full band range to pass through, and the dual-pass filter layer is used to allow the red light, the green light, the blue light, and infrared light in the specific wavelength range to pass through. The method further includes: The light ray passes through the infrared cut-off filter layer and the red filter layer to reach the red pixel; the light ray passes through the infrared cut-off filter layer and the green filter layer to reach the green pixel; the light ray passes through the infrared cut-off filter layer and the blue filter layer to reach the blue pixel; the light ray passes through the infrared filter layer to reach the infrared pixel; or the light ray passes through the all-pass filter layer or the dual-pass filter layer to reach the white pixel.

In a possible implementation, the image sensor further includes a logic control circuit. The logic control circuit includes a first control line and a second control line. The large pixel is coupled to the first control line, and the small pixel is coupled to the second control line. The method further includes: controlling an exposure start time point of the red pixel based on the first control line; and controlling an exposure start time point of the green pixel based on the second control line.

According to a third aspect, this application provides an independent exposure apparatus. The apparatus includes at least two control units. Each of the at least two control units is configured to correspondingly control an exposure start time point of one type of pixel in a pixel array of a sensor. The pixel array of the sensor includes at least two types of pixels.

According to an existing sensor including a plurality of types of pixel, exposure time of different types of pixel is uniformly controlled. A problem of exposure imbalance easily occurs when a light condition is not ideal, exposure control is inflexible, and the sensor has a comparatively narrow dynamic range of exposure. The apparatus provided in this application can independently control exposure time of different types of pixel in the sensor, to improve a dynamic range and a signal-to-noise ratio of light sensing of the sensor. For example, the apparatus is a control unit or a logic control circuit that is independent of the sensor, and a corresponding product form may be a processor or a chip product including a processor.

In a possible implementation, the apparatus further includes the pixel array.

The apparatus may be a sensor including a control unit.

In a possible implementation, the sensor is an RGBIR sensor. The at least two types of pixels include a visible light pixel and an IR pixel. The visible light pixel includes an R pixel, a G pixel, and a B pixel. Alternatively, the at least two types of pixels include an R pixel, a B pixel, a G pixel, and an IR pixel. The at least two control units include a first control unit, a second control unit, a third control unit, and a fourth control unit. The first control unit is configured to control the exposure start time point of the R pixel; the second control unit is configured to control an exposure start time point of the G pixel; the third control unit is configured to control an exposure start time point of the B pixel; and the fourth control unit is configured to control an exposure start time point of the IR pixel.

In a possible implementation, the sensor is an RGBW sensor. The at least two types of pixels include a visible light pixel and a W pixel. The visible light pixel includes an R pixel, a G pixel, and a B pixel. The at least two control units include a first control unit and a second control unit. The first control unit is configured to control an exposure start time point of the visible light pixel; and the second control unit is configured to control an exposure start time point of the W pixel. Alternatively, the at least two types of pixels include an R pixel, a B pixel, a G pixel, and a W pixel. The at least two control units include a first control unit, a second control unit, a third control unit, and a fourth control unit. The first control unit is configured to control an exposure start time point of the R pixel; the second control unit is configured to control an exposure start time point of the G pixel; the third control unit is configured to control an exposure start time point of the B pixel; and the fourth control unit is configured to control an exposure start time point of the W pixel.

In a possible implementation, the sensor is an RCCB sensor. The at least two types of pixels include a visible light pixel and a C pixel. The visible light pixel includes an R pixel and a B pixel. The at least two control units include a first control unit and a second control unit. The first control unit is configured to control an exposure start time point of the visible light pixel; and the second control unit is configured to control an exposure start time point of the C pixel. Alternatively, the at least two types of pixels include an R pixel, a B pixel, and a C pixel. The at least two control units include: a first control unit, a second control unit, and a third control unit. The first control unit is configured to control an exposure start time point of the R pixel; the second control unit is configured to control an exposure start time point of the B pixel; and the third control unit is configured to control an exposure start time point of the C pixel.

In a possible implementation, exposure time of the at least two types of pixels is controlled based on the at least two control units, to meet a preset ratio.

In a possible implementation, the apparatus further includes an exposure end control unit, configured to uniformly control exposure end time points of all pixels in the pixel array.

According to a fourth aspect, this application provides an independent exposure method, where the method is applied to a sensor including at least two types of pixels. The at least two types of pixels include a first-type pixel and a second-type pixel. The method includes: controlling an exposure start time point of the first-type pixel based on a first control unit; and controlling an exposure start time point of the second-type pixel based on a second control unit.

In a possible implementation, the method further includes: controlling exposure time of each of the at least two types of pixels to meet a preset ratio.

For example, exposure time of the visible light pixel and the IR pixel is controlled based on the first control unit and the second control unit, to meet a preset ratio. Alternatively, exposure time of the R, G, B, and IR pixel is controlled based on the first control unit, the second control unit, the third control unit, and the fourth control unit, to meet a preset ratio. Alternatively, exposure time of the visible light pixel and the W pixel is controlled based on the first control unit and the second control unit, to meet a preset ratio. Alternatively, exposure time of the R, G, B, and W pixel is controlled based on the first control unit, the second control unit, the third control unit, and the fourth control unit, to meet a preset ratio. Alternatively, exposure time of the visible light pixel and the C pixel is controlled based on the first control unit and the second control unit, to meet a preset ratio. Alternatively, exposure time of the R pixel, the B pixel, and the C pixel is controlled based on the first control unit, the second control unit, and the third control unit, to meet a preset ratio.

In a possible implementation, the sensor is an RGBIR sensor, the first-type pixel is a visible light pixel, the second-type pixel is an IR pixel, and the visible light pixel includes an R pixel, a G pixel, and a B pixel. Alternatively, the sensor is an RGBW sensor, the first-type pixel is a visible light pixel, the second-type pixel is a W pixel, and the visible light pixel includes an R pixel, a G pixel, and a B pixel. Alternatively, the sensor is an RCCB sensor, the first-type pixel is a visible light pixel, the second-type pixel is a C pixel, and the visible light pixel includes an R pixel and a B pixel.

In a possible implementation, the at least two types of pixels further include a third-type pixel. The method further includes: controlling an exposure start time point of the third-type pixel based on the third control unit.

In a possible implementation, the sensor is an RCCB sensor, the first-type pixel is an R pixel, the second-type pixel is a B pixel, and the third-type pixel is a C pixel. The method specifically includes: controlling an exposure start time point of the R pixel based on the first control unit; controlling an exposure start time point of the B pixel based on the second control unit; and controlling an exposure start time point of the C pixel based on the third control unit.

In a possible implementation, the at least two types of pixels further include a third-type pixel and a fourth-type pixel. The method further includes: controlling an exposure start time point of the third-type pixel based on the third control unit; and controlling an exposure start time point of the fourth-type pixel based on the fourth control unit.

In a possible implementation, the sensor is an RGBIR sensor, the first-type pixel is an R pixel, the second-type pixel is a G pixel, the third-type pixel is a B pixel, and the fourth-type pixel is an IR pixel. The method specifically includes: controlling an exposure start time point of the R pixel based on the first control unit; controlling an exposure start time point of the G pixel based on the second control unit; controlling an exposure start time point of the B pixel based on the third control unit; and controlling an exposure start time point of the IR pixel based on the fourth control unit. Alternatively, the sensor is an RGBW sensor, the first-type pixel is an R pixel, the second-type pixel is a G pixel, the third-type pixel is a B pixel, and the fourth-type pixel is a W pixel. The method specifically includes: controlling an exposure start time point of the R pixel based on the first control unit; controlling an exposure start time point of the G pixel based on the second control unit; controlling an exposure start time point of the B pixel based on the third control unit; and controlling an exposure start time point of the W pixel based on the fourth control unit.

In a possible implementation, the method further includes: uniformly controlling exposure end time points of all pixels in the pixel array based on an exposure end control unit.

According to a fifth aspect, this application provides a computer-readable storage medium. The computer-readable storage medium stores instructions, and when the instructions are run on a computer or a processor, the computer or the processor is enabled to perform the method according to the fourth aspect or any one of the possible implementations of the fourth aspect.

According to a fifth aspect, this application provides a computer program product including instructions. When the computer program product is run on a computer or a processor, the computer or the processor is enabled to perform the method according to the fourth aspect or any one of the possible implementations of the fourth aspect.

### BRIEF DESCRIPTION OF DRAWINGS

FIG. 1 is a schematic diagram of a typical Bayer RGB CFA;
FIG. 2 is a schematic diagram of a typical RGBIR CFA;
FIG. 3 is a schematic diagram of a typical RGBIR CFA;
FIG. 4 is a light sensing characteristic curve of a photosensitive component;
FIG. 5 is a schematic diagram of an example structure of a pixel array of a large and small-pixel image sensor;
FIG. 6 is a schematic diagram of an example structure of a pixel array of a large and small-pixel image sensor;
FIG. 7 is a schematic diagram of an example structure of an image obtaining apparatus;
FIG. 8 is a schematic diagram of an example structure of an image sensor according to this application;
FIG. 9a is a schematic diagram of an example structure of an image sensor according to this application;
FIG. 9b is a schematic diagram of an example structure of an image sensor according to this application;
FIG. 10 is a schematic diagram of an example structure of a vertical section of an image sensor according to this application;
FIG. 11 is a schematic diagram of an example structure of a vertical section of an image sensor according to this application;
FIG. 12 is a schematic diagram of an example structure of a vertical section of an image sensor according to this application;
FIG. 13 is a schematic diagram of an example structure of a vertical section of an image sensor according to this application;
FIG. 14 is a schematic diagram of an example of a control connection for sorting large and small pixel arrays;
FIG. 15 is a time sequence diagram of an example of a control signal;
FIG. 16 is a schematic diagram of an example of a control connection for sorting large and small pixel arrays;
FIG. 17 is a time sequence diagram of an example of a control signal;
FIG. 18 is a schematic diagram of an example of a control connection for sorting large and small pixel arrays;
FIG. 19 is a time sequence diagram of an example of a control signal;
FIG. 20a is a light sensitive characteristic curve of a photosensitive component in an image sensor according to this application;
FIG. 20b is a light sensitive characteristic curve of a photosensitive component in an image sensor according to this application;
FIG. 21 is a schematic diagram of an example structure of an independent exposure apparatus;
FIG. 22 is a flowchart of an embodiment of an image light sensing method according to this application;
FIG. 23 is a flowchart of an embodiment of an image light sensing method according to this application; and
FIG. 24 is a flowchart of an embodiment of a method for independently controlling exposure time according to this application.

### DESCRIPTION OF EMBODIMENTS

To make the objectives, technical solutions, and advantages of this application clearer, the following clearly and describes the technical solutions in this application with reference to the accompanying drawings in this application. Obviously, the described embodiments are a part rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as an indication or implication of relative importance or an indication or implication of an order. In addition, the terms "include", "have", and any variant thereof are intended to cover non-exclusive inclusion, for example, include a series of steps or units. Methods, systems, products, or devices do not need to be limited to those steps or units that are clearly listed, but may include other steps or units that are not clearly listed or inherent to these processes, methods, products, or devices.

It should be understood that in this application, "at least one (item)" means one or more and "a plurality of' means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. In addition, "at least one of the following items (pieces)" or a similar expression thereof means any combination of these items, including a single item (piece) or any combination of a plurality of items (pieces). For example, at least one (piece) of a, b, or c may indicate a, b, c, "a and b", "a and c", "b and c", or "a, b, and c", where a, b, and c may be singular or plural.

FIG. 4 is a light sensing characteristic curve of a photosensitive component. As shown in FIG. 4, in the photosensitive component, an R pixel has a light sensing strength peak in a wavelength range (near 650 nm) of red light, a G pixel has a light sensing strength peak in a wavelength range (near 550 nm) of green light, a B pixel has a light sensing peak in a wavelength range (near 450 nm) of the green light, and an IR pixel has a light sensing strength peak in a wavelength range (near 850 nm or 910 nm) of an infrared light. In addition, the R pixel, the G pixel, and the B pixel also have light sensing strength peaks in the wavelength range (near 850 nm or 910 nm) of the infrared light. A red filter layer, a green filter layer, and a blue filter layer allow optical signals at the two light sensing strength peaks corresponding to their respective colors to pass through, and therefore light sensing results that are obtained by light sensing of the R pixel, the G pixel, and the B pixel of the photosensitive component carry an IR signal to some extent even if a light filter layer is used, and color information of an image obtained by an image sensor may be inaccurate due to impact of the IR signal.

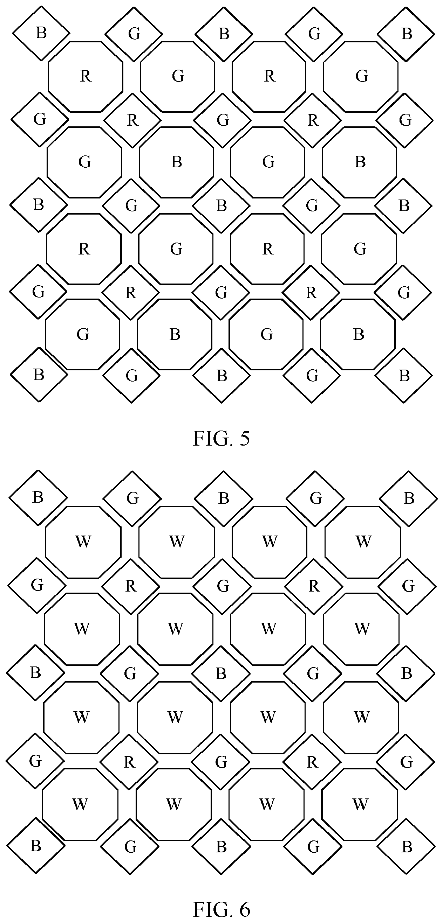

FIG. 5 is a schematic diagram of an example structure of a pixel array of a large and small-pixel image sensor. As shown in FIG. 5, a pixel array of the image sensor is formed by embedding a group of small pixels (including an R pixel, a G pixel, and a B pixel) into a gap between large pixels (including the R pixel, the G pixel, and the B pixel). A light sensing area of the large pixel is large and sensitivity is high, while a light sensing area of the small pixel is small and sensitivity is low. A large-pixel image has good restoration capability for a dark region, and a small-pixel image has good overexposure suppression effect for a bright region. High dynamic range imaging (High Dynamic Range Imaging, HDR) can be obtained by fusing the two images. However, the image sensor does not support an infrared night vision scenario.

FIG. 6 is a schematic diagram of an example structure of a pixel array of a large and small-pixel image sensor. As shown in FIG. 6, to better obtain details of the dark region, the large pixel is sensitive to all bands, that is, the large pixel is a white pixel, used to sense white light (including red light, green light, blue light, and infrared light), and a small pixel senses visible light (including the red light, the green light, and the blue light), to further improve the light sensing capability of the image sensor. However, light sensitivity of the image sensor to the visible light is weak, and it is difficult to obtain accurate color information. In addition, the small pixel is more greatly interfered by crosstalk light from the large pixel, and this greatly affects a signal-to-noise ratio of the small pixel.

According to the image sensor provided in this application, based on independent light sensitivity of the visible light and the infrared light, not only sufficient color information may be obtained to ensure resolution of a visible light image, but also crosstalk on the visible light caused by the infrared light may be reduced, and a signal-to-noise ratio of the visible light pixel may be improved.

The image sensor may be applied to a device such as a mobile phone, a surveillance camera, and a security access control system, and to a field in which photographing, camera shooting, and surveillance need to use a color image and an IR or W black-and-white image to process an image. Typical application scenarios include: liveness detection of visible light and infrared light, video surveillance at night, and color-black-and-white dynamic fusion. A terminal device to which this application is applicable may also be referred to as user equipment (user equipment, UE), and may be deployed on land, including an indoor or outdoor scenario and a handheld or in-vehicle scenario, or may be deployed on water (for example, on a steamship), or may be deployed in the air (for example, on an airplane, a balloon, or a satellite). The terminal device may be a terminal device 100 (mobile phone), a tablet computer (pad), a computer with a wireless transceiver function, a virtual reality (virtual reality, VR) device, an augmented reality (augmented reality, AR) device, a monitoring device, a smart large screen, a smart television, a wireless device in remote medical (remote medical), a wireless device in smart home (smart home), or the like. This is not limited in this application.

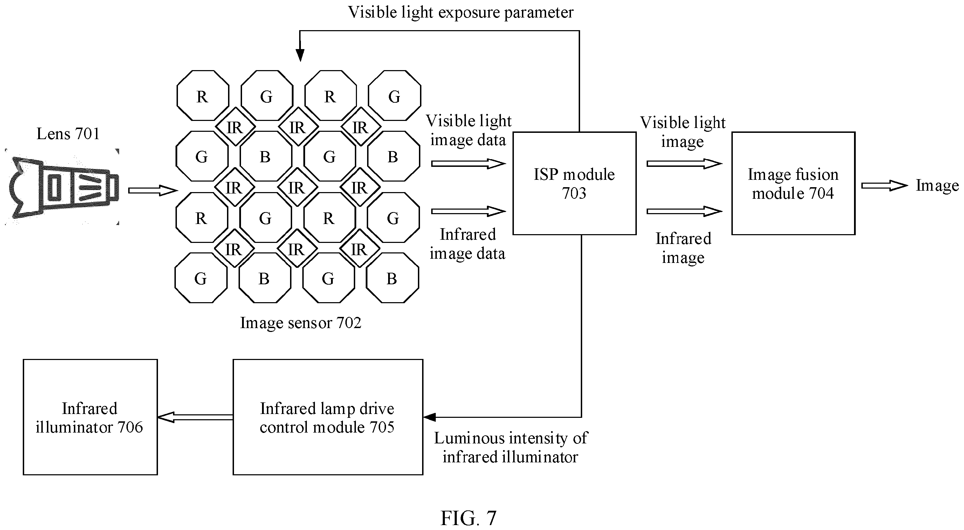

FIG. 7 is a schematic diagram of an example structure of an image obtaining apparatus. As shown in FIG. 7, the image obtaining apparatus includes modules such as a lens 701, an image sensor 702, an ISP module 703, an image fusion module 704, an infrared lamp drive control module 705, and an infrared illuminator 706. The lens 701 is configured to capture a still image or a video, capture an optical signal reflected from a to-be-photographed object, and transfer the captured optical signal to the image sensor. The image sensor 702 may use the image sensor provided in this application, and is configured to generate original image data (visible light image data and infrared image data) of the to-be-photographed object based on the optical signal. The ISP module 703 is configured to adjust a visible light exposure parameter and luminous intensity of the infrared illuminator based on an original image of the to-be-photographed object until that a convergence condition of an auto exposure algorithm is met, and is further configured to separate a visible light image and an infrared image from the original image of the to-be-photographed object. The image fusion module 704 is configured to fuse the separated visible light image and the infrared image to obtain a target image. The infrared lamp drive control module 705 is configured to control the infrared illuminator 706 based on the luminous intensity of the infrared illuminator configured by the ISP module 703. The infrared illuminator 706 is configured to provide infrared light illumination.

Optionally, the image obtaining apparatus may use a structure of a single lens plus a single image sensor, or a dual lens plus dual image sensors, or a single lens plus a splitter and dual image sensors. The structure of the single lens can reduce costs, and the structure of the single image sensor can simplify a structure of a camera. This is not specifically limited in this application.

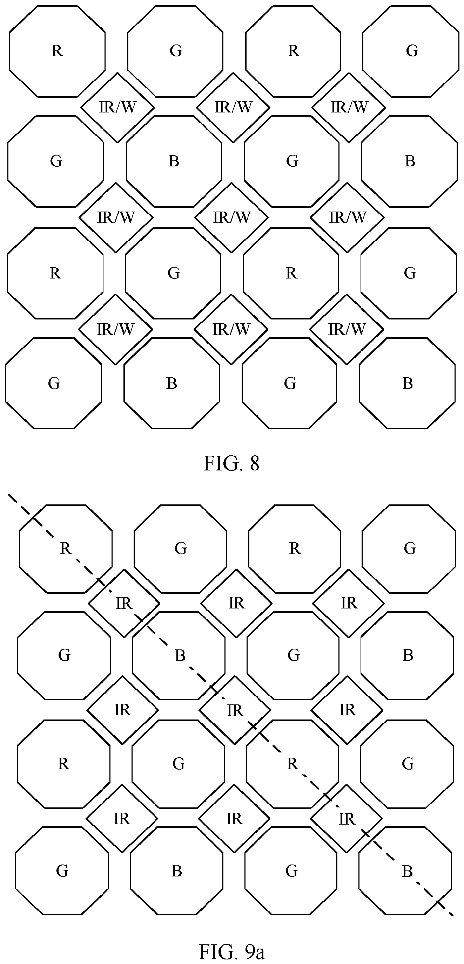

FIG. 8 is a schematic diagram of an example structure of an image sensor according to this application. As shown in FIG. 8, the image sensor includes a red (R) pixel, a green (G) pixel, a blue (B) pixel, and an invisible light pixel. Because the red light, the green light, and the blue light are collectively referred to as visible lights, pixels corresponding to the red light, the green light, and the blue light, that is, the R pixel, the G pixel, and the B pixel, may be collectively referred to as visible light pixels. In contrast, a pixel other than the R pixel, the G pixel, and the B pixel is referred to as an invisible light pixel in this application. For example, the invisible light pixel includes an infrared (IR) pixel and a white (W) pixel. Generally, white light refers to light that is in a full band range, including red light, green light, blue light, and infrared light.

FIG. 9a is a schematic diagram of an example structure of an image sensor according to this application. As shown in FIG. 9a, an R pixel, a G pixel, and a B pixel are large pixels, and an IR pixel is a small pixel. A light sensing area of the large pixel is greater than that of the small pixel, and correspondingly, light sensitivity of the large pixel is greater than that of the small pixel. The R pixel, the G pixel, and the B pixel are arranged in a Bayer RGB CFA format. For example, as shown in FIG. 1, this array is arranged in a 2x2 array. A first row of the minimum repetition unit includes the R pixel and the G pixel, and the second row includes the G pixel and the B pixel.

For a pixel array including the large pixels and the small pixels, the large pixels (the R pixel, the G pixel, and the B pixel) are in a Bayer RGB CFA format that is consistent with a conventional RGB sensor, so that color information obtained based on the R pixel, the G pixel, and the B pixel may not be reduced, resolution of a visible light image may not be decreased, and an existing Demosaic algorithm may be directly reused and seamlessly embedded into an existing ISP In addition, the light sensing area of the large pixel is greater than that of the small pixel. Correspondingly, light sensitivity of the large pixel is greater than that of the small pixel. Therefore, the large pixel is more sensitive to obtain more accurate color information. Further, an area of the small pixel (the IR pixel) that is adjacent to the large pixel (the visible light pixel) is small, so that a contact range between the IR pixel and the visible light pixel is greatly reduced, light crosstalk caused by the IR pixel to the visible light pixel is reduced, interference that is caused by a light sensing result of the IR pixel to color information obtained by the visible light pixel is reduced, and therefore, a signal-to-noise ratio of the color information of the visible light image is further improved. Further, in an infrared night vision scenario or a dark scenario, infrared light may be supplemented, that is, when the infrared light is strong, and the IR pixel is designed as the small pixel, an imaging result of the infrared light does not be affected, to be specific, obtaining of detail information does not be affected. According to the image sensor provided in this application, the more accurate color information may be obtained based on the large pixel, the detail information that is obtained based on the small pixel may not be affected, so that details and color performance of the fused image are greatly improved.

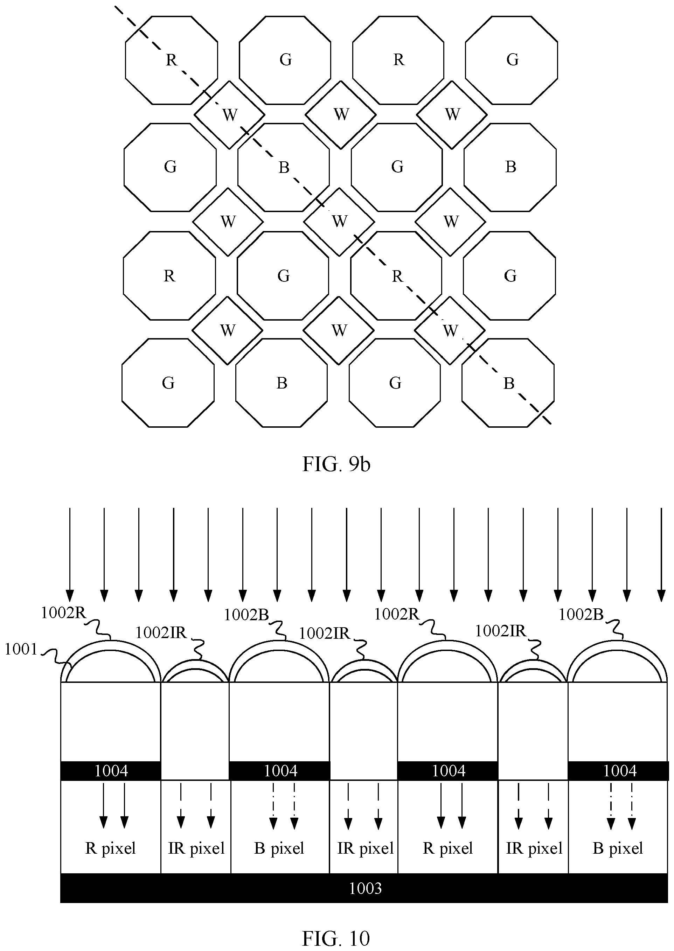

FIG. 9b is a schematic diagram of an example structure of an image sensor according to this application. As shown in FIG. 9b, an R pixel, a G pixel, and a B pixel are large pixels, and a W pixel is a small pixel. A light sensing area of the large pixel is greater than that of the small pixel, and correspondingly, light sensitivity of the large pixel is greater than that of the small pixel. The R pixel, the G pixel, and the B pixel are arranged in a Bayer RGB CFA format as shown in FIG. 1.

For a pixel array including the large pixels and the small pixels, the large pixels (the R pixel, the G pixel, and the B pixel) are in a Bayer RGB CFA format that is consistent with a conventional RGB sensor, so that color information obtained based on the R pixel, the G pixel, and the B pixel may not be reduced, resolution of a visible light image may not be decreased, and an existing Demosaic algorithm may be directly reused and seamlessly embedded into an existing ISP. In addition, the light sensing area of the large pixel is greater than that of the small pixel. Correspondingly, light sensitivity of the large pixel is greater than that of the small pixel. Therefore, the large pixel is more sensitive to obtain more accurate color information. Further, an area of the small pixel (W pixel) that is adjacent to the large pixel (the visible light pixel) is small, so that a contact range between the W pixel and the visible light pixel is greatly reduced, light crosstalk caused by the W pixel to the visible light pixel is reduced, interference that is caused by a light sensing result of the W pixel to color information obtained by the visible light pixel is reduced, and therefore, a signal-to-noise ratio of the color information of the visible light image is further improved. Further, a spectral response curve of a white light pixel is wide and a light sensing capability is strong. Therefore, when the white pixel is designed as the small pixel, an imaging result of white light may not be affected, and obtaining of detail information may not be affected. According to the image sensor provided in this application, more accurate color information may be obtained based on the large pixel, the detail information that is obtained based on the small pixel may not be affected, so that details and color performance of the fused image are greatly improved.

In the pixel array, four large pixels surround one small pixel, and four small pixels surround one large pixel. However, at an edge position of the pixel array, if the large pixel is located on the outermost side, the four small pixels surrounding one large pixel may not be implemented at the position of the large pixel, and if the small pixel is located on the outermost side, the four large pixels surrounding one small pixel may not be implemented at the position of the small pixel. Settings of four pixels surrounding another pixel are not specifically limited in this application.

In this application, color information of an image may be obtained based on the visible light pixel, detail information of the image may be obtained based on the invisible light pixel, and a visible light image that is obtained by the visible light pixel is fused with an invisible light image that is obtained by the invisible light pixel to obtain a final image. In addition, the visible light pixel is in a Bayer RGB CFA format that is consistent with the conventional RGB sensor. Therefore, the visible light image is a full-resolution image, and an invisible light pixel that is used as the IR pixel or the W pixel may be placed between a pixel row and a pixel column of the visible light pixel, to form a pixel array in which four visible light pixels surround one invisible light pixel and four invisible light pixels surround one visible light pixel. Therefore, the obtained invisible light image is also a full-resolution image, and design of the large pixel and the small pixel does not affect the color information of the visible light image and details of the invisible light image.

Generally, a distance between center points of adjacent pixels in the pixel array is fixed, and the distance depends on a size, a process, and the like of an image sensor. On this basis, the areas of the large pixel and the small pixel may be set based on the crosstalk precision of the image sensor. To reduce crosstalk, it is expected that a ratio of the area of the large pixel to that of the small pixel is as large as possible. To improve the light sensitivity, a larger area of the large pixel indicates obtained more accurate color information of the image, and a larger area of the small pixel indicates obtained more detail information of the image. Therefore, although maximum areas of the large pixel and the small pixel are limited, it is still expected that the areas of the large pixel and the small pixel are as large as possible. Further, the areas of the large pixel and the small pixel may be preset to achieve a balance between factors such as precision of the image sensor, a requirement of illuminance, and luminous intensity of an infrared illuminator. Optionally, setting the areas of the large pixel and the small pixel may alternatively be setting a spacing between adjacent sides of the large pixel and the small pixel. If the areas of the large pixel and the small pixel are large, the spacing between the adjacent sides is small.

Based on the foregoing factors, the large pixel and the small pixel are regular polygons or circles in this application. Shapes of the large pixel and the small pixel may be the same or different. For example, as shown in FIG. 8 and FIG. 9, the large pixel is a regular octagon, and the small pixel is a square. Optionally, the large pixel and the small pixel may alternatively be regular hexagons, squares, or the like. This is not specifically limited in this application.

FIG. 10 is a schematic diagram of an example structure of a vertical section of an image sensor according to this application. The vertical section in this embodiment is formed by cutting along a dotted line in FIG. 8. For example, FIG. 10 shows seven pixels on the dotted line, that is, an R pixel, an IR pixel, a B pixel, an IR pixel, an R pixel, an IR pixel, and a B pixel. Each pixel includes a microlens 1001, a light filter layer, and a charge readout module 1003. An infrared cut-off filter layer 1004 is further disposed in the R pixel, the G pixel, and the B pixel. A light filter layer in the R pixel is a red filter layer 1002R, a light filter layer in the G pixel is a green filter layer 1002G, a light filter layer in the B pixel is a blue filter layer 1002B, and a light filter layer in the IR pixel is an infrared filter layer 1002IR.

The infrared cut-off filter layer 1004 may also be referred to as IR-Cut, and configured to cut off an optical signal whose wavelength is greater than a first preset wavelength, and the optical signal whose wavelength is greater than the first preset wavelength includes an infrared signal. For example, the first preset wavelength is 650 nm. The infrared cut-off filter layer 1004 is configured to cut off an optical signal whose wavelength is greater than 650 nm, and the optical signal whose wavelength is greater than 650 nm includes infrared light. For example, a typical wavelength of visible light is about 430 nm to 650 nm, and a typical wavelength of infrared light of light sensing of the IR pixel is about 850 nm to 920 nm. The IR-Cut can cut off the optical signal whose wavelength is greater than 650 nm, so that infrared light that is in a wavelength range of about 850 nm to 920 nm cannot enter the R pixel, the G pixel, and the B pixel.

A light sensing characteristic of a light ray in the R pixel when the light ray passes through the red filter layer 1002R is shown by a black thin solid line R in FIG. 4, and the R pixel has two light sensing strength peaks near 650 nm of red light and near 850 nm of the infrared light. A light sensing characteristic of a light ray in the G pixel when the light ray passes through the green filter layer 1002G is shown by a short dotted line G in FIG. 4, and the G pixel has two light sensing strength peaks near 550 nm of green light and near 850 nm of the infrared light. A light sensing characteristic of a light ray in the B pixel when the light ray passes through the blue filter layer 1002B is shown by a dot-dotted line B in FIG. 4, and the B pixel has two light sensing strength peaks near 450 nm of blue light and near 850 nm of the infrared light. A light sensing characteristic of the IR pixel when a light ray passes through the infrared filter layer 1002IR is shown by a long dotted line IR in FIG. 4, and the IR pixel has a light sensing strength peak only near 850 nm (910 nm) of the infrared light.

Based on this, it can be learned that, the red filter layer 1002R can allow the red light and infrared light that is in a first wavelength range to pass through, the green filter layer 1002G can allow green light and infrared light that is in a second wavelength range to pass through, and the blue filter layer 1002B can allow blue light and infrared light that is in a third wavelength range to pass through. It should be understood that the first wavelength range, the second wavelength range, and the third wavelength range may be the same or different, and wavelengths of the infrared light that is in the first wavelength range, the infrared light that is in the second wavelength range, and the infrared light that is in the third wavelength range are all greater than the first preset wavelength. The infrared filter layer 1002IR may allow only infrared light that is in a specific wavelength range to pass through. It should be understood that the specific wavelength range may be 850 nm to 920 nm, or the specific wavelength range may be any specific wavelength in and near the range of 850 nm to 920 nm. For example, the IR pixel may mainly sense infrared light of 850 nm, or may mainly sense infrared light of 910 nm. The IR pixel may sense infrared light of any specific wavelength in and near the range of 850 nm to 920 nm. This is not limited in this application.

The microlens 1001 is a tiny convex lens apparatus on each light sensing pixel of the image sensor, and is configured to enable an inputted light ray to enter each light sensing pixel in a centralized manner.

The infrared cut-off filter layer 1004 is separately coated on microlenses corresponding to the R pixel, the G pixel, and the B pixel. Therefore, a light ray exceeding 650 nm cannot enter the R pixel, the G pixel, or the B pixel.

The red filter layer 1002R is further coated on a microlens corresponding to the R pixel. Therefore, only red light near 650 nm enters the R pixel, and the R pixel may sense only the red light.

The green filter layer 1002G is further coated on a microlens corresponding to the G pixel. Therefore, only green light near 550 nm enters the G pixel, and the G pixel may sense only the green light.

The blue filter layer 1002B is further coated on a microlens corresponding to the B pixel. Therefore, only blue light near 450 nm enters the B pixel, and the B pixel may sense only the blue light.

The infrared filter layer 1002IR is coated on a microlens corresponding to the IR pixel. Therefore, only near-infrared light near 850 nm or 910 nm enters the IR pixel, and the IR pixel may sense only the infrared light.

In this application, the infrared cut-off filter layer is coated on the microlenses corresponding to the R pixel, the G pixel, and the B pixel, to cut off the infrared light from reaching the R pixel, the G pixel, and the B pixel, and remove an IR signal from a light sensing result of a visible light pixel. Therefore, a color in the light sensing result is more accurate, and this improves light sensing effect of the sensor. Further, in this application, the infrared cut-off filter layer may be coated on the microlens by using a coating technology. Therefore, a complex mechanical structure does not need to be added. In addition, a structure of a pixel under the microlens is not changed, and the pixel under the microlens has only a photosensitive component such as a photodiode. A comparatively simple and stable internal structure of the pixel helps control a problem, such as a chief ray angle (Chief Ray Angle, CRA), that affects imaging, and the filter layer is coated on the microlens, thereby improving the light sensing effect of the sensor while maintaining a stable structure of the pixel.

An internal structure of a pixel is not a smooth inner wall, and there are some protrusions on the inner wall of the pixel. If an incident angle of a light ray deviates from a main optical path of the microlens, some light rays are blocked by the protrusions on the inner wall of the pixel, and the light sensing effect of the sensor deteriorates. A CRA of a pixel located in an optical center (optical center) of the sensor is 0 degrees, and a CRA angle of a pixel that is farther away from the optical center is larger. Generally, if a deviation distance between a pixel and a picture center is used as a horizontal coordinate and a CRA angle of the pixel is used as a vertical coordinate, a function between the deviation distance from the pixel to the center and the CRA angle of the pixel is a linear function. This rule is referred to as CRA performance consistency. To enable the sensor to comply with the rule of the CRA performance consistency, a position of a microlens of a pixel needs to be fine-tuned based on a position of the pixel. For example, a microlens of a pixel located in an optical center is located right above the pixel, and a microlens of a pixel that deviates from the optical center is not located right above the pixel. A microlens of a pixel farther away from the optical center deviates to a larger extent. If the internal structure of the pixel under the microlens is comparatively complex, the CRA performance may be likely to be inconsistent. In this case, the method of fine-tuning a position of a microlens on a pixel surface may be no longer applicable. However, the filter layer added to the sensor provided in this application is coated on the microlens. This does not change the internal structure of the pixel, and an internal result of the pixel is simple and stable, thereby improving the light sensing effect of the sensor without affecting the CRA performance consistency of the sensor.

Each pixel in the image sensor includes a photosensitive component. For example, the photosensitive component may be a photodiode, and is configured to convert an optical signal into an electrical signal or convert an optical signal into charges.

The charge readout module 1003 is configured to: read charges accumulated by the photosensitive component, and output the charge to a subsequent image processing circuit or image processor. The charge readout module is similar to a buffer area. The charges accumulated by the photosensitive component are transferred and temporarily buffered in the charge readout module, and a charge signal of a corresponding pixel is outputted under the control of a readout signal.

It should be understood that, in the image sensor shown in FIG. 10, only the red filter layer 1002R, the green filter layer 1002G, the blue filter layer 1002B, and the infrared filter layer 1002IR may be coated on the microlenses 1001, and the infrared cut-off filter layer 1004 is disposed inside the R pixel, the G pixel, and the B pixel. For example, a piece of glass is disposed inside a pixel, and the infrared cut-off filter layer 1004 is coated on the disposed glass.

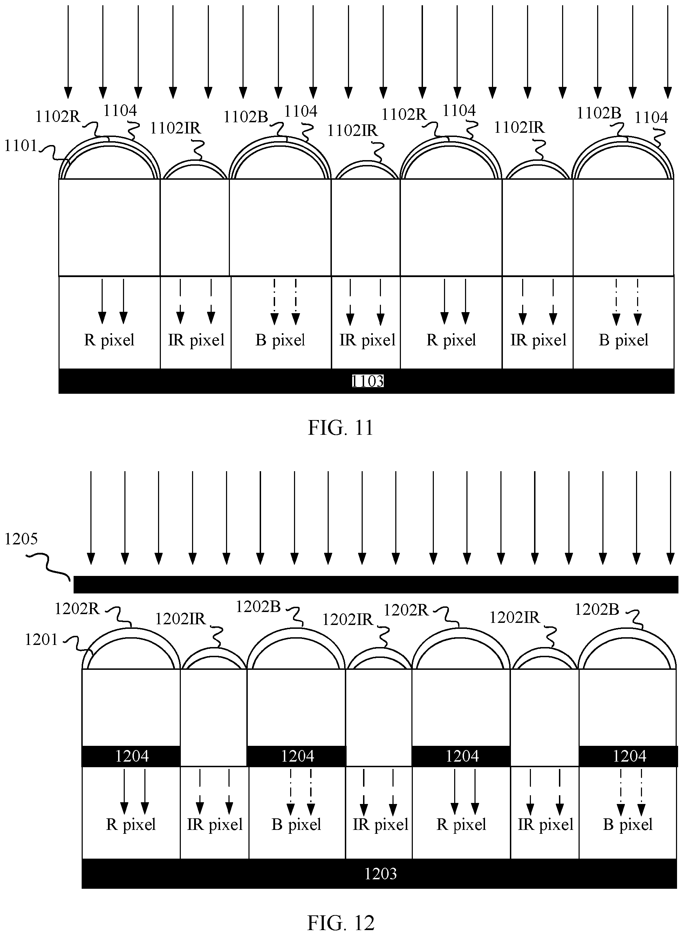

In a possible implementation, FIG. 11 is a schematic diagram of an example structure of a vertical section of an image sensor according to this application. As shown in FIG. 11, the infrared cut-off filter layer 1104 is separately coated on the red filter layer 1102R, the green filter layer 1102G, and the blue filter layer 1102B. Other parts of the image sensor shown in FIG. 11 are the same as those of the sensor shown in FIG. 10, and details are not described herein again.

In a possible implementation, only the infrared cut-off filter layer 1104 may be coated on the microlens 1101, the red filter layer 1102R may be disposed in the R pixel, and the green filter layer 1102G may be disposed in the G pixel, the blue filter layer 1102B may be disposed in the B pixel, and an infrared filter layer 1102IR may be disposed in the IR pixel. For example, a piece of glass is disposed inside a pixel, and the red filter layer 1102R, the green filter layer 1102G, the blue filter layer 1102B, and/orthe infrared filter layer 1102IR are/is coated on the disposed glass.

In a possible implementation, the red filter layer 1102R, the green filter layer 1102G, and the blue filter layer 1102B may be separately coated on the infrared cut-off filter layer 1104.

According to the image sensor provided in this application, a coating position relationship between the infrared cut-off filter layer and the red filter layer, the green filter layer, or the blue filter layer on the outer side or the inner side of the microlens is not limited.

Based on the image sensor shown in FIG. 10, FIG. 12 is a schematic diagram of an example structure of a vertical section of an image sensor according to this application. As shown in FIG. 12, the image sensor further includes: a light filter 1205, configured to filter out ultraviolet light and infrared light whose wavelength is greater than a second preset wavelength, where the second preset wavelength is greater than the first preset wavelength and any wavelength that is in the specific wavelength range and that passes through the infrared filter layer. In this way, the visible light and some infrared light pass through the light filter 1205.

The infrared light whose wavelength is greater than the second preset wavelength may be referred to as far-infrared light, and a wavelength of the far-infrared light is greater than a wavelength of infrared light that is allowed to pass through the infrared filter layer. For example, a wavelength of the visible light is about 430 nm to 650 nm, and a typical wavelength of infrared light of light sensing of the IR pixel is about 850 nm to 920 nm. The second preset wavelength may be, for example, 900 nm or 920 nm, or may be any wavelength between 850 nm and 950 nm. For example, the light filter 1205 may be an all-pass light filter or a dual-pass (dual-pass) light filter. For example, the all-pass light filter is configured to filter out ultraviolet light whose wavelength is less than 400 nm and infrared light whose wavelength is greater than 900 nm. For example, the dual-pass light filter is configured to allow only visible light and infrared light that is within a range of 800 nm to 900 nm to pass through. In this case, it is equivalent that the dual-pass light filter filters out the infrared light greater than 900 nm. For example, the dual-pass light filter is configured to allow only visible light and infrared light that is within a range of 900 nm to 950 nm to pass through. In this case, it is equivalent that the dual-pass light filter filters out infrared light greater than 950 nm. It should be understood that both a wavelength of infrared light filtered out by the all-pass light filter and a wavelength of infrared light allowed to pass through the dual-pass light filter may be designed based on a requirement. This is not limited in this application. The light filter 1205 can prevent a far-infrared light ray with a comparatively long wavelength and an ultraviolet light ray from affecting a light sensing characteristic of the photosensitive component.

For the microlens 1201, the light filter layer, an infrared cut-off filter layer 1204, and a charge readout module 1203, refer to the description of the embodiment shown in FIG. 10. Details are not described herein again.

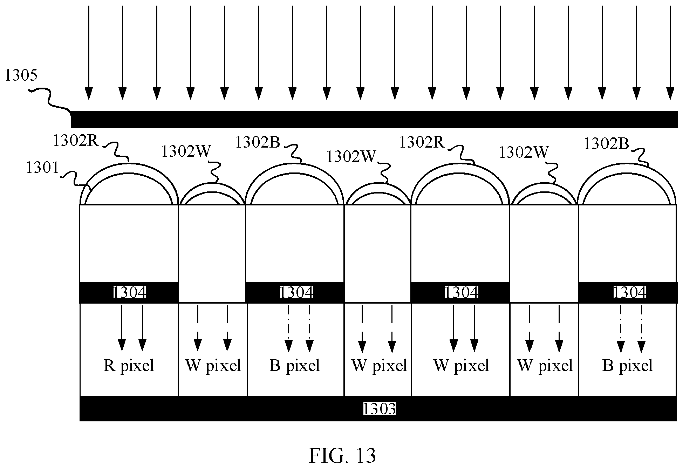

FIG. 13 is a schematic diagram of an example structure of a vertical section of an image sensor according to this application. The vertical section in this embodiment is formed by cutting along a dotted line in FIG. 9. As shown in FIG. 13, for example, seven pixels along a dotted line are shown, that is, an R pixel, a W pixel, a B pixel, a W pixel, an R pixel, a W pixel, and a B pixel. Each pixel includes a microlens 1301, a light filter layer, a charge readout module 1303, and a light filter 1305. An infrared cut-off filter layer 1304 is further disposed in the R pixel, the G pixel, and the B pixel. A light filter layer in the R pixel is a red filter layer 1302R, a light filter layer in the G pixel is a green filter layer 1302G, a light filter layer in the B pixel is a blue filter layer 1302B, and a light filter layer in the IR pixel is an all-pass filter layer or a dual-pass filter layer 1302W

The all-pass filter layer is used to allow light in a full band range, including red light, green light, blue light, and infrared light to pass through. The dual-pass filter layer is configured to allow the red light, the green light, the blue light, and infrared light in a specific wavelength range to pass through.

For the microlens 1301, the red filter layer 1302R, the green filter layer 1302G, the blue filter layer 1302B, the infrared cut-off filter layer 1304, the charge readout module 1303, and the light filter 1305, refer to the description of the embodiment shown in FIG. 10 to 12. Details are not described herein again.

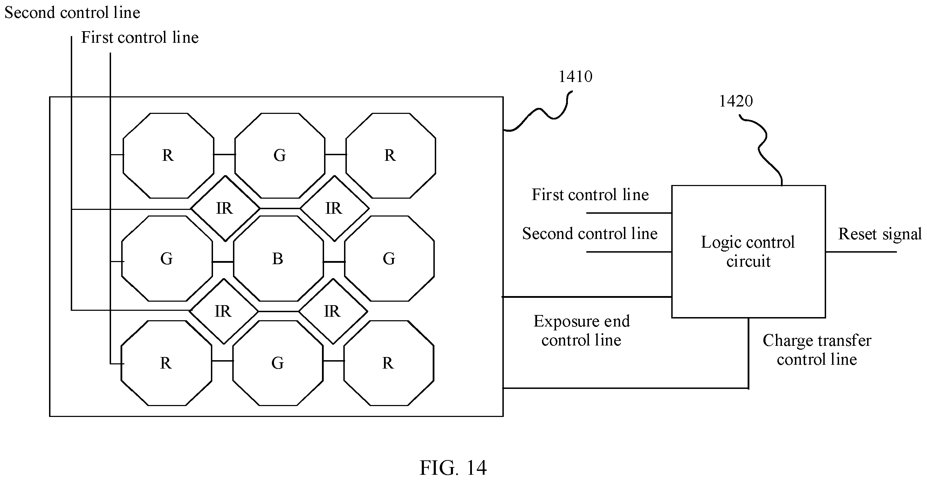

This application further provides a sensor that can independently control exposure time of a large pixel and a small pixel. Refer to FIG. 14. FIG. 14 is a schematic diagram of an example of a control connection for sorting large and small pixel arrays.

The image sensor includes a pixel array 1410 and a logic control circuit 1420.

The pixel array 1410 is the pixel array in the image sensor shown in any embodiment in FIG. 8 to 13.

The logic control circuit 1420 is configured to separately control the exposure time of the large pixel and the small pixel. The large pixel includes an R pixel, a G pixel, and a B pixel. The small pixel is an IR pixel or a W pixel. FIG. 14 uses the IR pixel as an example. Specifically, the logic control circuit 1420 includes a first control line and a second control line, or may include two independent control circuits: a first control circuit and a second control circuit. The large pixels in the pixel array 1410 are coupled to the first control line, and the small pixels in the pixel array 1410 are coupled to the second control line. It should be understood that control lines with a same name in FIG. 14 are a same line or are connected to each other. For example, a first control line on a pixel array side is the same as or is connected to the first control line of the logic control circuit, and a second control line on the pixel array side is the same as or is connected to the second control line of the logic control circuit.

A pixel at a position of the large pixel is coupled to the first control line, and a pixel at a position of the small pixel is coupled to the second control line. It should be understood that when an arrangement of the pixel array is different, respective coordinate conditions of pixels are correspondingly changed. Therefore, a manner of connecting the logic control circuit and the pixel array needs to be correspondingly designed based on an arrangement manner of the sensor.

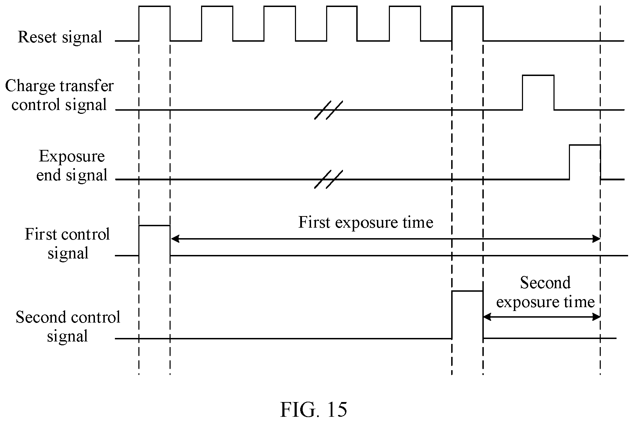

The first control line outputs a first control signal, and the second control line outputs a second control signal. The first control signal is used to control an exposure start time point of the large pixel, and the second control signal is used to control an exposure start time point of the small pixel. The first control signal and the second control signal are independent of each other. Therefore, the exposure start time points of the large pixel and the small pixel may be different. For example, when a first effective transition edge of the first control signal arrives, the large pixel starts to be exposed, and when a second effective transition edge of the second control signal arrives, the small pixel starts to be exposed. The effective transition edges of the first control signal and the second control signal may be falling edges or rising edges, or one may be a falling edge and the other may be a rising edge. The effective transition edges of the control signals are not limited in this application. FIG. 15 is a time sequence diagram of an example of a control signal. As shown in FIG. 15, the effective transition edges of the first control signal and the second control signal are both falling edges. In a possible implementation, the first control signal and the second control signal may be obtained based on a system reset signal of the logic control circuit. As shown in FIG. 15, the first control signal and the second control signal are active signals at a high level. When the falling edge of the first control signal arrives, the large pixel starts to be exposed, and when the falling edge of the second control signal arrives, the small pixel starts to be exposed.

Optionally, the logic control circuit 1420 further includes a reset signal, where the reset signal may be a system clock signal. Both the first control signal and the second control signal may be obtained by using the reset signal. For example, the logic control circuit 1420 internally includes a logic operation circuit. The logic operation circuit may include, for example, an AND, OR, NOT, or XOR logical operation. The logic operation circuit includes three inputs: a variable x, a variable y, and the reset signal. The logic operation circuit includes two output ends: the first control line and the second control line. If the variable x and the variable y meet a coordinate condition of the large pixel, the reset signal is connected to an output end of the first control line. If the variable x and the variable y meet a coordinate condition of the small pixel, the reset signal is connected to an output end of the second control line.

Optionally, the logic control circuit 1420 further includes:
an exposure end control line, configured to uniformly control exposure end time points of all pixels in the pixel array.

The exposure end control line outputs an exposure end signal, where the exposure end signal may be an active signal at a high level or an active signal at a low level. The exposure end time point may be a high-level falling edge or a low-level rising edge. In the time sequence diagram of the control signal shown in FIG. 15, the exposure end control signal is an active signal at a high level, and when a falling edge of the exposure end control signal arrives, exposure of all pixels in the pixel array is stopped. To be specific, exposure start time points of the large pixel and the small pixel in the pixel array are separately controlled by the first control line and the second control line, and exposure end time points are uniformly controlled by the exposure end control line. As shown in FIG. 15, the exposure time of the large pixel is a time difference between the falling edge of the first control signal and the falling edge of the exposure end control signal, that is, first exposure time. The exposure time of the small pixel is a time difference between the falling edge of the second control signal and the falling edge of the exposure end control signal, that is, second exposure time. Therefore, the exposure time of the large pixel and the small pixel is separately controlled.

In an example implementation, arrival moments of the first effective transition edge of the first control signal and the second effective transition edge of the second control signal may be controlled, to enable the exposure time of the large pixel and the small pixel to meet a preset ratio. For example, when a ratio of the exposure time of the large pixel to the exposure time of the small pixel is 2:1, an exposure result has a higher definition and a higher signal-to-noise ratio. In this way, a control signal of the large pixel transits first, and a control signal of the small pixel transits later, and it is ensured that a time difference between transition time points of the two pixels enables the exposure time of the visible light signal and the infrared light signal to meet the preset ratio.

According to the image sensor provided in this application, the exposure time of the large pixel and the small pixel is separately controlled. For example, when infrared light is excessively strong and visible light is excessively weak, the exposure time of the large pixel may be increased, and the exposure time of the small pixel may be reduced, so that imaging brightness of the large pixel and the small pixel tends to be balanced. This resolves a problem of exposure imbalance that easily occurs when the infrared light or the visible light is dominant, improves a dynamic range of light sensing of the sensor, and meets user requirements on indicators such as a definition and a signal-to-noise ratio. Further, the light sensing effect of the image sensor may be more precisely controlled by precisely setting the ratio of the exposure time of the large pixel to the exposure time of the small pixel.

Optionally, the logic control circuit 1420 further includes:
a charge transfer control line, configured to control a time point at which the charges accumulated by the photosensitive component of the pixel array is transferred to the charge readout module. The charge transfer control line outputs a charge transfer control signal, where the charge transfer control signal may be an active signal at a high level or an active signal at a low level. In the time sequence diagram of the control signal shown in FIG. 15, the charge transfer control signal is an active signal at a high level, and when a falling edge of the charge transfer control signal arrives, the accumulated charges are transferred from the photosensitive component to the charge readout module. In a possible implementation, the exposure end control signal is reset after the charge transfer control signal is reset.

It should be understood that functions of the logic control circuit may be alternatively implemented by software code that is run on a processor, or some functions of the logic control circuit may be implemented by a hardware circuit and some functions of the logic control circuit may be implemented by a software module. For example, the sensor may include a pixel array and a control unit. The control unit is a software module that is run on the processor. The control unit includes a first control unit and a second control unit, configured to respectively and independently control the exposure start time points of the large pixel and the small pixel. The control unit further includes an exposure end control unit, configured to uniformly control the exposure end time points of all pixels in the pixel array. The control unit further includes a charge transfer control unit and a reset unit. The reset unit is configured to provide the reset signal. Functions of the charge transfer control unit are similar to that of the charge transfer control line. Details are not described herein.

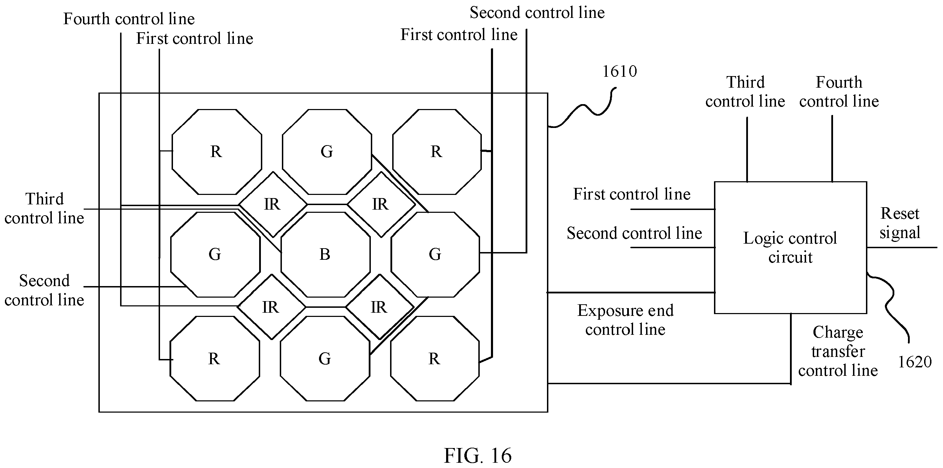

This application further provides a sensor that can independently control exposure time of all color pixels. Refer to FIG. 16. FIG. 16 is a schematic diagram of an example of a control connection for sorting large and small pixel arrays.

The sensor includes a pixel array 1610 and a logic control circuit 1620.

The pixel array 1610 is the pixel array in the image sensor shown in any embodiment in FIG. 8 to 13.

A logic control circuit 1620 is configured to separately and independently control exposure time of an R pixel, a G pixel, a B pixel, and a small pixel (an IR pixel or a W pixel, where FIG. 16 uses the IR pixel as an example). Specifically, the logic control circuit 1620 includes a first control line, a second control line, a third control line, and a fourth control line. Alternatively, the logic control circuit includes four independent control circuits: a first control circuit, a second control circuit, a third control circuit, and a fourth control circuit. In a pixel array, an R pixel is coupled to the first control line, a G pixel is coupled to the second control line, a B pixel is coupled to the third control line, and an IR pixel is coupled to the fourth control line. It should be understood that control lines with a same name in FIG. 16 are a same control line or are connected to each other. For example, a first control line on a pixel array side and the first control line of the logic control circuit are a same line, and a fourth control line on the pixel array side and the fourth control line of the logic control circuit are a same line, and so on.

Coordinates of a pixel coupled to the first control line meet the coordinate condition of the R pixel, coordinates of a pixel coupled to the second control line meet the coordinate condition of the G pixel, coordinates of a pixel coupled to the third control line meet the coordinate condition of the B pixel, and coordinates of a pixel coupled to the fourth control line meet the coordinate condition of the IR pixel. It should be understood that when an arrangement of the pixel array is different, respective coordinate conditions of pixels are correspondingly changed. Therefore, a manner of connecting the logic control circuit and the pixel array needs to be correspondingly designed based on an arrangement manner of the sensor.

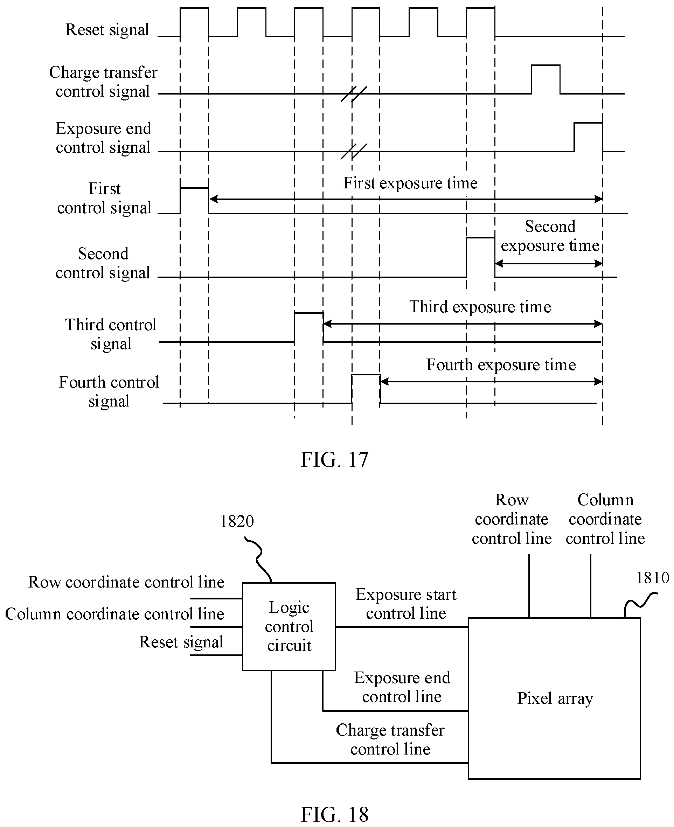

The first control line outputs a first control signal, the second control line outputs a second control signal, the third control line outputs a third control signal, and the fourth control line outputs a fourth control signal. The first control signal is used to control an exposure start time point of the R pixel, the second control signal is used to control an exposure start time point of the G pixel, the third control signal is used to control an exposure start time point of the B pixel, and the fourth control signal is used to control an exposure start time point of the IR pixel. The first control signal to the fourth control signal are independent of each other. Therefore, the exposure start time points of the R pixel, the G pixel, the B pixel, and the IR pixel may be different. For example, when a first effective transition edge of the first control signal arrives, the R pixel starts to be exposed; when a second effective transition edge of the second control signal arrives, the G pixel starts to be exposed; when a third effective transition edge of the third control signal arrives, the B pixel starts to be exposed; and when a fourth effective transition edge of the fourth control signal arrives, the IR pixel starts to be exposed. The first control signal to the fourth control signal may be all active signals at a high level. The effective transition edges of the first control signal to the fourth control signal may be all falling edges or rising edges, or some of the effective transition edges may be falling edges and remaining effective transition edges are rising edges. The effective transition edges of the control signals are not limited in this application. FIG. 17 is a time sequence diagram of an example of a control signal. As shown in FIG. 17, the first control signal to the fourth control signal are all active signals at a high level, and the effective transition edges of the first control signal to the fourth control signal are all falling edges. In a possible implementation, the first control signal to the fourth control signal may be obtained based on a system reset signal of the logic control circuit. As shown in FIG. 17, when the falling edge of the first control signal arrives, the R pixel starts to be exposed; when the falling edge of the second control signal arrives, the G pixel starts to be exposed; when the falling edge of the third control signal arrives, the B pixel starts to be exposed; and when the falling edge of the fourth control signal arrives, the IR pixel starts to be exposed.

Optionally, the logic control circuit 1620 further includes a reset signal, where the reset signal may be a system clock signal. The first control signal to the fourth control signal may be all obtained by using the reset signal. For example, the logic control circuit 1620 internally includes a logic operation circuit. The logic operation circuit may include, for example, an AND, OR, NOT, or XOR logical operation. The logic operation circuit includes three inputs: a variable x, a variable y, and the reset signal. The logic operation circuit includes four output ends: the first control line to the fourth control line. If the variable x and the variable y meet a coordinate condition of the R pixel, the reset signal is connected to an output end of the first control line. If the variable x and the variable y meet a coordinate condition of the G pixel, the reset signal is connected to an output end of the second control line. If the variable x and the variable y meet a coordinate condition of the B pixel, the reset signal is connected to an output end of the third control line. If the variable x and the variable y meet a coordinate condition of the IR pixel, the reset signal is connected to an output end of the fourth control line. It should be understood that when an arrangement of the pixel array is different, the respective coordinate conditions of the pixels are correspondingly changed. Therefore, the logical operation circuit inside the logic control circuit needs to be correspondingly adjusted based on an arrangement manner of the pixel array.

Optionally, the logic control circuit 1620 further includes:
an exposure end control line, configured to uniformly control exposure end time points of all pixels in the pixel array.

The exposure end control line outputs an exposure end signal, where the exposure end signal may be an active signal at a high level or an active signal at a low level. The exposure end time point may be a high-level falling edge or a low-level rising edge. In the time sequence diagram of the control signal shown in FIG. 17, the exposure end control signal is an active signal at a high level, and when a falling edge of the exposure end control signal arrives, exposure of all pixels in the pixel array is stopped. To be specific, exposure start time points of the R pixel, the G pixel, the B pixel, and the IR pixel in the pixel array are separately controlled by the first control line to the fourth control line, and exposure end time points are uniformly controlled by the exposure end control line. For example, in the time sequence diagram of the control signal shown in FIG. 17, the exposure time of the R pixel is a time difference between the falling edge of the first control signal and the falling edge of the exposure end control signal, that is, first exposure time. The exposure time of the G pixel, the B pixel, and the IR pixel is second exposure time, third exposure time, and fourth exposure time respectively. Therefore, the exposure time of the R pixel, G pixel, B pixel, and IR pixel is separately controlled.

In an example implementation, arrival moments of the first effective transition edge of the first control signal to the fourth effective transition edge of the fourth control signal may be controlled, to enable the exposure time of the R pixel, G pixel, B pixel, and IR pixel to meet a preset ratio.

Optionally, the logic control circuit 1620 further includes a charge transfer control line, configured to control a time point at which the charges accumulated by the photosensitive component of the pixel array is transferred to the charge readout module. The charge transfer control line outputs a charge transfer control signal, where the charge transfer control signal may be an active signal at a high level or an active signal at a low level. The charge transfer control signal shown in FIG. 17 is the same as that shown in FIG. 15.

It should be understood that functions of the logic control circuit may be alternatively implemented by software code that is run on a processor, or some functions of the logic control circuit may be implemented by a hardware circuit and some functions of the logic control circuit may be implemented by a software module. For example, the sensor may include a pixel array and a control unit. The control unit is a software module that is run on the processor. The control unit includes a first control unit, a second control unit, a third control unit, and a fourth control unit, configured to respectively and independently control exposure start time points of the R pixel, G pixel, B pixel, and IR pixel. The control unit further includes an exposure end control unit, configured to uniformly control exposure end time points of the four pixel components. The control unit further includes a charge transfer control unit and a reset unit. The reset unit is configured to provide the reset signal. Functions of the charge transfer control unit are similar to that of the charge transfer control line. Details are not described herein.

According to the image sensor provided in this application, the exposure time of the R pixel, G pixel, B pixel, and IR pixel is separately controlled, thereby further improving a dynamic range of light sensing of the sensor. When some scenarios have a comparatively high requirement on light sensing results of the R pixel and the G pixel, and expect to reduce light sensing results of the B pixel and the IR pixel, the exposure time of the R pixel, G pixel, B pixel, and IR pixel can be flexibly controlled to enhance light sensing effects of the R pixel and the G pixel and weaken light sensing effects of the B pixel and the IR pixel, so that a final light sensing result may better meet user requirements on indicators such as a definition and a signal-to-noise ratio. Further, the exposure time of the R pixel, G pixel, B pixel, and IR pixel may be preset to meet the preset ratio, to precisely control a light sensing effect of the sensor.

This application further provides a sensor in which exposure time of each pixel can be separately controlled. Refer to FIG. 18. FIG. 18 is a schematic diagram of an example of a control connection for sorting large and small pixel arrays.

The sensor includes a pixel array 1810 and a logic control circuit 1818.

The pixel array 1810 is the pixel array in the sensor shown in any embodiment in FIG. 8 to 13.

The logic control circuit 1818 includes a row coordinate control circuit and a column coordinate control circuit, or includes a row coordinate control line and a column coordinate control line. Each pixel in the pixel array is coupled to a row coordinate control line and a column coordinate control line of the pixel.

The logic control circuit 1818 further includes a reset signal and an exposure start control line. When a row coordinate control signal outputted by a row coordinate line of a target pixel and a column coordinate control signal outputted by a column coordinate line of the target pixel are active signals, the exposure start control line outputs the reset signal to the target pixel, and controls an exposure start time point of the target pixel based on the reset signal. For example, the exposure start control line has a plurality of branches, and each pixel is coupled to one branch. When the row coordinate control signal and the column coordinate control signal of the target pixel meet a requirement, a branch corresponding to the target pixel outputs an active control signal. The column coordinate control line and the row coordinate control line are equivalent to a switch. The reset signal is an input, and the exposure start control line is an output. When signals in the column coordinate control line and the row coordinate control line are active signals, the switch is turned on, so that the reset signal can be outputted to the target pixel by using the exposure start control line, and exposure of the target pixel is controlled. For example, when the signals in the column coordinate control line and the row coordinate control line are active signals, and an effective transition edge of the reset signal arrives, the target pixel is controlled to start to be exposed. If either of the signals in the column coordinate control line and the row coordinate control line does not meet the requirement, the switch is turned off, and the exposure start control line outputs no control signal. Because each pixel in the pixel array has a corresponding row coordinate line and a corresponding column coordinate line, exposure time of each pixel may be separately controlled. For example, signals in a row coordinate line and a column coordinate line of a pixel that needs to be intensively exposed may be preferably set to the active signals, to prolong exposure time of the pixel that needs to be intensively exposed.

Optionally, the logic control circuit 1818 further includes an exposure end control line, configured to uniformly control exposure end time points of all pixels in the pixel array. For details, refer to the exposure end control lines of the logic control circuit 1618 and the logic control circuit 1818. Details are not described herein.

Optionally, the logic control circuit 1818 further includes a charge transfer control line, configured to control when to transfer charges accumulated by a photosensitive component to a charge readout module. For details, refer to the charge transfer control lines of the logic control circuit 1618 and the logic control circuit 1818. Details are not described herein.

It should be understood that functions of the logic control circuit may be alternatively implemented by software code that is run on a processor, or some functions of the logic control circuit may be implemented by a hardware circuit and some functions of the logic control circuit may be implemented by a software module. For example, the sensor may include a pixel array and a control unit. The control unit is a software module that is run on the processor. The control unit includes a row control unit, a column control unit, and an exposure start control unit. The row control unit and the column control unit are configured to respectively indicate a row coordinate and a column coordinate of a pixel. The exposure start control unit is configured to: when a row control unit and a column control unit of a target pixel meet a requirement, output an active control signal to control an exposure start time point of the target pixel.

According to the sensor provided in this application, an exposure start time point of each pixel may be controlled based on statuses of control signals in the row coordinate control line and the column coordinate control line of the pixel, and exposure end time points of all pixels are uniformly controlled by the exposure end control line. Therefore, exposure time of all the pixels may be different. Further, a time point at which a row coordinate control signal and a column coordinate control signal corresponding to a pixel become active signals may be set, to enable exposure time of each pixel to meet the preset ratio. In some scenarios in which a pixel in a target area needs to be enhanced, only exposure time of the pixel in the target area may be increased. This further improves light sensing of the sensor, and further meets a user requirement on a light sensing result.

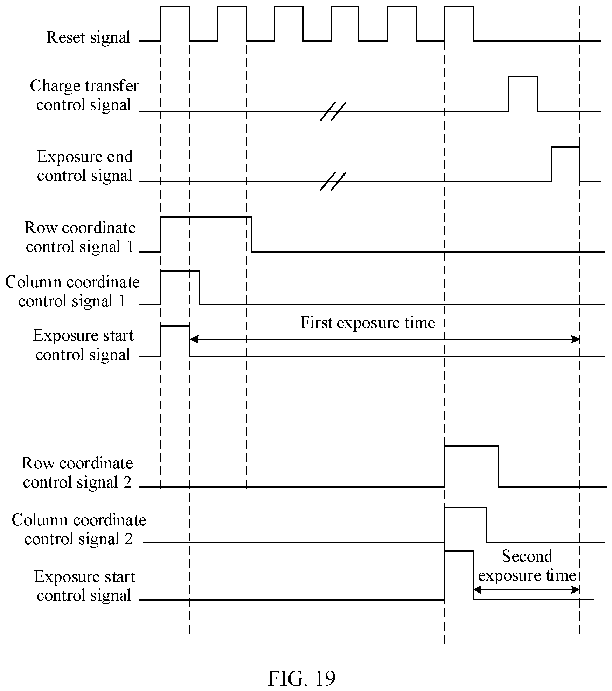

FIG. 19 is a time sequence diagram of an example of a control signal. FIG. 19 uses two pixels as an example to describe control on exposure start time points of the pixels by exposure start control signals. All signals in the time sequence diagram are active signals at a high level. It should be understood that each control signal may alternatively be an active signal at a low level.

A first pixel is coupled to a first row coordinate control line and a first column coordinate control line. A signal in the first row coordinate control line is a row coordinate control signal 1, and a signal in the first column coordinate control line is a column coordinate control signal 1. A second pixel is coupled to a second row coordinate control line and a second column coordinate control line. A signal in the second row coordinate control line is a row coordinate control signal 2, and a signal in the second column coordinate control line is a column coordinate control signal 2. When both the row coordinate control signal 1 and the column coordinate control signal 1 of the first pixel are at a high level, an exposure start control signal of the first pixel is active. Specifically, a reset signal is used as the exposure start control signal, and when a falling edge of the reset signal arrives, the first pixel is controlled to start to be exposed. When both the row coordinate control signal 2 and the column coordinate control signal 2 of the second pixel are at a high level, an exposure start control signal of the second pixel is active. Specifically, the reset signal is used as the exposure start control signal, and when a falling edge of the reset signal arrives, the second pixel is controlled to start to be exposed. When a falling edge of an exposure end control signal arrives, both exposure of the first pixel and exposure of the second pixel are stopped. In this case, exposure time of the first pixel is first exposure time, and exposure time of the second pixel is second exposure time. It should be understood that the exposure start control signal of the first pixel and the exposure start control signal of the second pixel may be two different branches of a same signal. When the coordinate control signals of the first pixel meet a requirement, a branch corresponding to the first pixel outputs an active control signal. When the coordinate control signals of the second pixel meet a requirement, a branch corresponding to the second pixel outputs an active control signal.

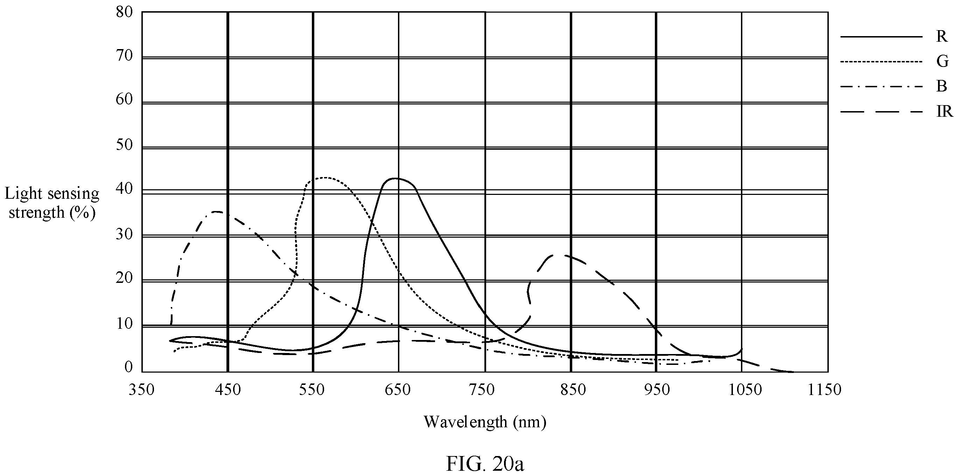

FIG. 20a is a light sensitive characteristic curve of a photosensitive component in an image sensor according to this application. As shown in FIG. 20a, a horizontal coordinate indicates a wavelength of a light ray, and a unit is nm; and a vertical coordinate indicates light sensing strength. A thin solid line indicates a light sensing characteristic curve of an R pixel, a short dotted line indicates a light sensing characteristic curve of a G pixel, a dot-dotted line indicates a light sensing characteristic curve of a B pixel, and a long dotted line indicates a light sensing characteristic curve of an IR pixel. It can be learned from FIG. 20a that the R pixel has a light sensing strength peak only near 650 nm of red light, the G pixel has a light sensing strength peak only near 550 nm of green light, the B pixel has a light sensing strength peak only near 450 nm of blue light, and the IR pixel has a light sensing strength peak only near 850 nm (which may be 910 nm in some cases) of infrared light. Compared with the light sensitive characteristic curve shown in FIG. 4, the image sensor provided in this application removes IR signals from light sensing results of the R pixel, the G pixel, and the B pixel, so that the R pixel can sense only the red light, the G pixel can sense only the green light, and the B pixel can sense only the blue light. Therefore, color accuracy of a light sensing result of the image sensor is improved.

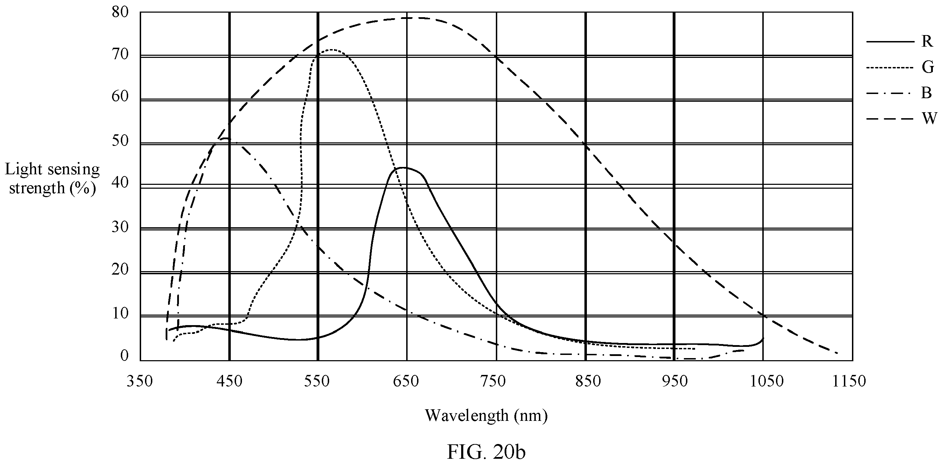

FIG. 20b is a light sensitive characteristic curve of a photosensitive component in an image sensor according to this application. As shown in FIG. 20b, a horizontal coordinate indicates a wavelength of a light ray, and a unit is nm; and a vertical coordinate indicates light sensing strength. A thin solid line indicates a light sensing characteristic curve of an R pixel, a short dotted line indicates a light sensing characteristic curve of a G pixel, a dot-dotted line indicates a light sensing characteristic curve of a B pixel, and a long dotted line indicates a light sensing characteristic curve of a W pixel. It can be learned from FIG. 20b that the R pixel has a light sensing strength peak only near 650 nm of the red light, the G pixel has a light sensing strength peak only near 550 nm of the green light, the B pixel has a light sensing strength peak only near 450 nm of the blue light, and a light sensing range of the W pixel covers a full band. Compared with the light sensitive characteristic curve shown in FIG. 4, the image sensor provided in this application removes IR signals from light sensing results of the R pixel, the G pixel, and the B pixel, so that the R pixel can sense only the red light, the G pixel can sense only the green light, and the B pixel can sense only the blue light. Therefore, color accuracy of a light sensing result of the image sensor is improved.

This application provides an independent exposure apparatus. The apparatus is configured to control exposure time of a pixel array of an image sensor. The apparatus includes at least two control units, each of the at least two control units is configured to correspondingly control an exposure start time point of one type of pixel in a pixel array of a sensor, and the pixel array of the sensor include at least two types of pixels, for example, a large pixel and a small pixel.

It should be understood that the independent exposure apparatus may be considered as a control apparatus that is independent of the image sensor, for example, may be a general-purpose processor or a dedicated processor, or may be considered as an independently solidified hardware logic or a hardware circuit. For example, the independent exposure apparatus may be considered as the logic control circuit in FIG. 14, FIG. 16, and FIG. 18.

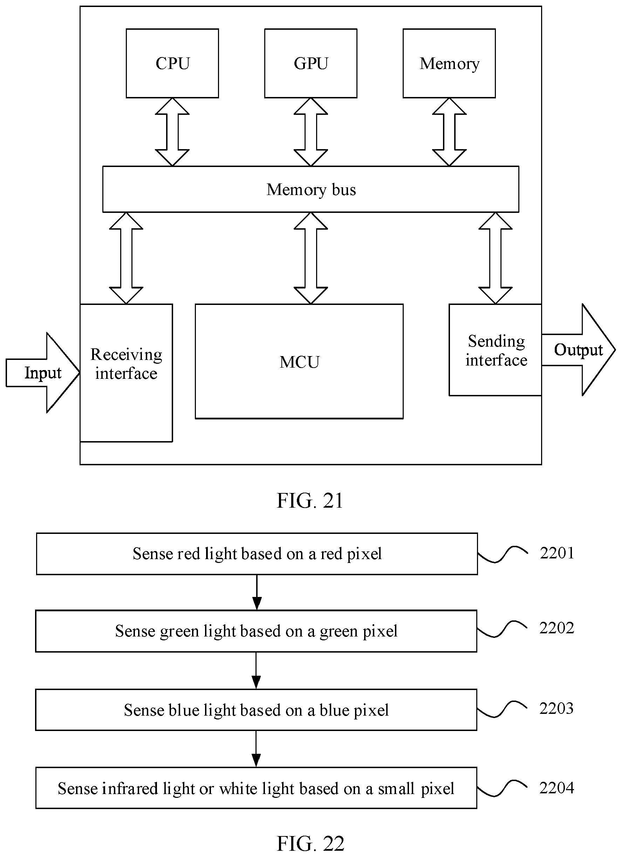

FIG. 21 is a schematic diagram of an example structure of an independent exposure apparatus. It should be understood that the logic control circuit shown in FIG. 14, FIG. 16, and FIG. 18 may also be implemented by a software module that is run on the exposure control apparatus shown in FIG. 21.

The exposure control apparatus includes: at least one central processing unit (Central Processing Unit, CPU), at least one memory, a microcontroller unit (Microcontroller Unit, MCU), a receiving interface, a sending interface, and the like. Optionally, the exposure control apparatus further includes a dedicated video or a graphics processor, a graphics processing unit (GPU), and the like.

Optionally, the CPU may be a single-core processor (single-CPU) or a multi-core processor (multi-CPU). Optionally, the CPU may be a processor group including a plurality of processors, and the plurality of processors are coupled to each other by using one or more buses. In a possible implementation, exposure control may be partially implemented by software code that is run on a general-purpose CPU or an MCU and partially implemented by a hardware logic circuit, or may be entirely implemented by software code that is run on a general-purpose CPU or an MCU. Optionally, the memory may be a nonvolatile memory, for example, an embedded multimedia card (Embedded Multi Media Card, EMMC), a universal flash storage (Universal Flash Storage, UFS), or a read-only memory (Read-Only Memory, ROM); or may be another type of static storage device that can store static information and instructions; or may be a volatile memory (volatile memory), for example, a random access memory (Random Access Memory, RAM), or another type of dynamic storage device that can store information and an instruction; or may be an electrically erasable programmable read-only memory (Electrically Erasable Programmable Read-Only Memory, EEPROM), a compact disc read-only memory (Compact Disc Read-Only Memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other computer-readable storage medium that can be configured to carry or store program code in a form of an instruction or a data structure and can be accessed by a computer. However, the memory is not limited thereto. The receiving interface may be a data input interface of a processor chip.

In a possible implementation, the independent exposure apparatus further includes a pixel array. In this case, the independent exposure apparatus includes at least two types of pixels, for example, a large pixel and a small pixel. In other words, the independent exposure apparatus may be an image sensor including a control unit or a logic control circuit, or the independent exposure apparatus is an image sensor that can independently control exposure. For example, the independent exposure apparatus may be an RGBIR sensor, an RGBW sensor, or the like that independently controls exposure.

It should be understood that in a possible implementation, a visible light pixel is classified into one type of pixel, to be specific, an R pixel, a G pixel, and a B pixel are classified into one type of pixel (a large pixel), and an IR pixel or a W pixel is considered as another type of pixel (a small pixel).

In another optional case, each pixel component is considered as one type of pixel. For example, an RGBIR sensor includes: four types of pixels: R, G, B, and IR, an RGBW sensor includes four types of pixels: R, G, B, and W, and an RCCB sensor includes three types of pixels: R, B, and C.

In a possible implementation, the sensor is an RGBIR sensor, and the RGBIR sensor may implement independent exposure of the visible light pixel and the IR pixel, or may implement independent exposure of the four components R, G, B, and IR.

For the RGBIR sensor that independently exposes the visible light pixel and the IR pixel, the at least two control units include a first control unit and a second control unit. The first control unit is configured to control an exposure start time point of the visible light pixel. The second control unit is configured to control an exposure start time point of the IR pixel.

For the RGBIR sensor that independently exposes the four components R, G, B, and IR, the at least two control units include a first control unit, a second control unit, a third control unit, and a fourth control unit. The first control unit is configured to control an exposure start time point of the R pixel. The second control unit is configured to control an exposure start time point of the G pixel. The third control unit is configured to control an exposure start time point of the B pixel. The fourth control unit is configured to control an exposure start time point of the IR pixel.

In a possible implementation, the sensor is an RGBW sensor, and the RGBW sensor may implement independent exposure of the visible light pixel and the W pixel, or may implement independent exposure of the four components R, G, B, and W.

For the RGBW sensor that independently exposes the visible light pixel and the W pixel, the at least two control units include a first control unit and a second control unit. The first control unit is configured to control an exposure start time point of the visible light pixel. The second control unit is configured to control an exposure start time point of the W pixel.

For the RGBW sensor that independently exposes the four components R, G, B, and W, the at least two control units include a first control unit, a second control unit, a third control unit, and a fourth control unit. The first control unit is configured to control an exposure start time point of the R pixel. The second control unit is configured to control an exposure start time point of the G pixel. The third control unit is configured to control an exposure start time point of the B pixel. The fourth control unit is configured to control an exposure start time point of the W pixel.

In a possible implementation, the independent exposure apparatus may further control exposure time of the at least two types of pixels based on the at least two control units, to meet a preset ratio. For example, exposure time of the visible light pixel and the IR pixel is controlled based on the first control unit and the second control unit, to meet a preset ratio. Alternatively, exposure time of the R, G, B, and IR pixel is controlled based on the first control unit, the second control unit, the third control unit, and the fourth control unit, to meet a preset ratio. Alternatively, exposure time of the visible light pixel and the W pixel is controlled based on the first control unit and the second control unit, to meet a preset ratio. Alternatively, exposure time of the R, G, B, and W pixel is controlled based on the first control unit, the second control unit, the third control unit, and the fourth control unit, to meet a preset ratio.

In a possible implementation, the independent exposure apparatus further includes an exposure end control unit, configured to uniformly control exposure end time points of all pixels in the pixel array.

This application further provides an image light sensing method. FIG. 22 is a flowchart of an embodiment of an image light sensing method according to this application. As shown in FIG. 22, the method is applied to the image sensor provided in this application. The image sensor includes a red pixel, a green pixel, a blue pixel, and an invisible light pixel, where the red pixel, the green pixel, and the blue pixel are large pixels, the invisible light pixel is a small pixel, and a light sensing area of the large pixel is greater than that of the small pixel. The red pixel, the green pixel, and the blue pixel are arranged in a Bayer format. The image light sensing method includes:
Step 2201: Sense the red light based on the red pixel.
Step 2202: Sense the green light based on the green pixel.
Step 2203: Sense the blue light based on the blue pixel.
Step 2204: Sense infrared light or white light based on the small pixel.

The invisible light pixel that is used as the small pixel includes an infrared pixel or a white pixel; and the white pixel is used to sense white light. The white light includes red light, green light, blue light, and infrared light. Therefore, the step 2204 may further include: sensing the infrared light based on the infrared pixel, or sensing the white light based on the white pixel.

In a possible implementation, four large pixels surround one small pixel, and four small pixels surround one large pixel. Areas of the large pixel and the small pixel are set based on crosstalk precision of the image sensor. The large pixel and the small pixel are regular polygons or circles.

For a structure and a principle of a pixel in the image sensor, refer to the description of the apparatus side. Details are not described herein again.

It should be further understood that numerals of the steps 2201 to 2204 does not limit an execution sequence of the method. The steps 2201 to 2204 may be usually performed synchronously, or the steps may not be strictly performed synchronously and there is a time difference between the steps. This is not limited in this application.

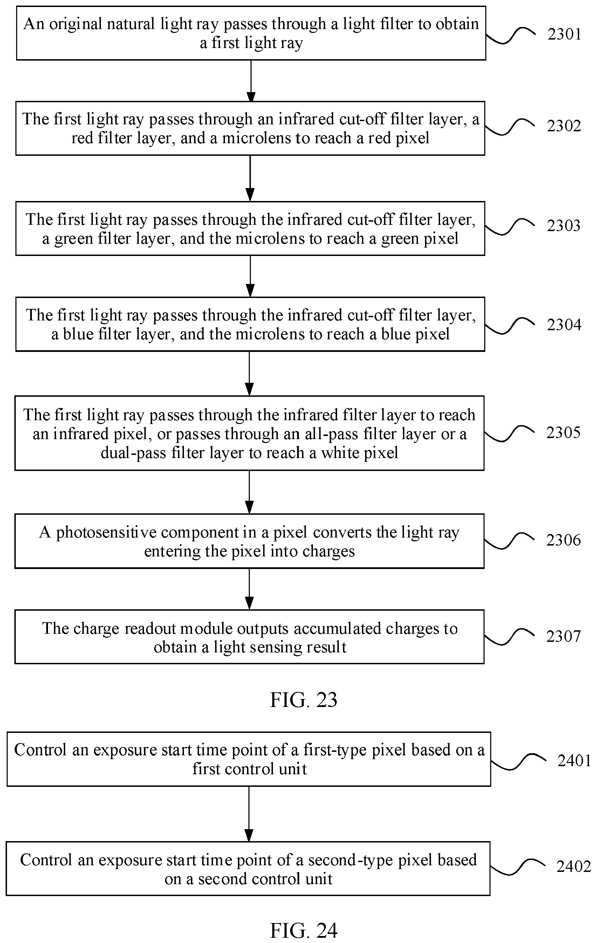

Based on the embodiment shown in FIG. 22, FIG. 23 is a flowchart of an embodiment of an image light sensing method according to this application. As shown in FIG. 23, the image sensor may further include a microlens, an infrared cut-off filter layer, and a light filter layer. Each pixel corresponds to one microlens, and each large pixel corresponds to one infrared cut-off filter layer. The infrared cut-off filter layer is used to cut off an optical signal whose wavelength is greater than a first preset wavelength, and the optical signal whose wavelength is greater than the first preset wavelength includes the infrared light. The light filter layer includes a red filter layer, a green filter layer, and a blue filter layer. Each red pixel corresponds to one red filter layer, and the red filter layer is used to allow the red light and infrared light in a first wavelength range to pass through. Each green pixel corresponds to one green filter layer, and the green filter layer is used to allow the green light and infrared light in a second wavelength range to pass through. Each blue pixel corresponds to one blue filter layer, and the blue filter layer is used to allow the blue light and infrared light in a third wavelength range to pass through. Wavelengths of the infrared light in the first wavelength range, the infrared light in the second wavelength range, and the infrared light in the third wavelength range are greater than the first preset wavelength. When the invisible light pixel is the infrared pixel, the light filter layer further includes an infrared filter layer. Each infrared pixel corresponds to one infrared filter layer, and the infrared filter layer is used to allow infrared light in a specific wavelength range to pass through. When the invisible light pixel is the white pixel, the light filter layer further includes an all-pass filter layer or a dual-pass filter layer. Each white pixel corresponds to one all-pass filter layer or one dual-pass filter layer, the all-pass filter layer is used to allow light in a full band range to pass through, and the dual-pass filter layer is used to allow the red light, the green light, the blue light, and infrared light in the specific wavelength range to pass through. The image light sensing method may further include:

Step 2301: An original natural light ray passes through the light filter to obtain a first light ray.

The light filter is configured to filter out ultraviolet light and far infrared light. The far infrared light is infrared light with a relatively long wavelength. For example, the infrared light with a wavelength greater than the second preset wavelength mentioned in the foregoing embodiment may be referred to as far infrared light. A wavelength of the far-infrared light is greater than that of infrared light that is in a specific wavelength range and that is subsequently allowed to pass through an infrared filter layer. For the light filter, refer to the description of the light filter on the apparatus side. Details are not described herein.

Step 2302: The first light ray passes through the infrared cut-off filter layer, the red filter layer, and the microlens to reach the red pixel.

Step 2303: The first light ray passes through the infrared cut-off filter layer, the green filter layer, and the microlens to reach the green pixel.

Step 2304: The first light ray passes through the infrared cut-off filter layer, the blue filter layer, and the microlens to reach the blue pixel.

Step 2305: The first light ray passes through the infrared filter layer to reach the infrared pixel, or passes through the all-pass filter layer or the dual-pass filter layer to reach the white pixel.

It should be further understood that numerals of the steps 2302 to 2305 does not limit an execution sequence of the method. The steps 2302 to 2305 may be usually performed synchronously, or the steps may not be strictly performed synchronously and there is a time difference between the steps. This is not limited in this application.

The infrared filter layer allows only the infrared light that is in the specific wavelength range to pass through, the red filter layer is used to allow only red light and infrared light that is in a first wavelength range to pass through, the green filter layer is used to allow only green light and infrared light that is in a second wavelength range to pass through, and the blue filter layer is used to allow only blue light and infrared light that is in a third wavelength range to pass through. The infrared light cut off by the infrared cut-off filter layer includes: the infrared light that is in the first wavelength range, the infrared light that is in the second wavelength range, and the infrared light that is in the third wavelength range.

Because all infrared light passing through the red filter layer, the green filter layer, and the blue filter layer is within a wavelength range of the infrared light cut off by the infrared cut-off filter layer, the infrared cut-off filter layer cuts off the infrared light from entering the R pixel, the G pixel, and the B pixel, so that the R pixel, the G pixel, and the B pixel may respectively sense only the red light, the green light, and the blue light.

It should be understood that the step 2301 is an optional step, and the original natural light ray may alternatively enter the filter layer and the microlens directly without passing through the light filter. The infrared cut-off filter layer may be located above the red filter layer, the green filter layer, or the blue filter layer. The red filter layer, the green filter layer, or the blue filter layer may alternatively be located above the infrared cut-off filter layer. This is not limited in this application.

Step 2306: A photosensitive component in the pixel converts the light ray entering the pixel into charges.

Step 2307: Output accumulated charges by the charge readout module to obtain a light sensing result.

In a possible implementation, the method further includes: controlling an exposure start time point of the large pixel based on a first control line, where the visible light pixel includes the R pixel, the G pixel, and the B pixel; and controlling an exposure start time point of the infrared pixel based on a second control line, where the small pixel includes the IR pixel and the W pixel.

The large pixel and the small pixel may be independently exposed, thereby improving a light sensing effect of the image sensor.

In a possible implementation, the method further includes: controlling, based on the first control line and the second control line, exposure time of the large pixel and the small pixel to meet a preset ratio.

In a possible implementation, the method further includes: controlling an exposure start time point of the R pixel based on the first control line; controlling an exposure start time point of the G pixel based on the second control line; controlling an exposure start time point of the B pixel based on a third control line; and controlling an exposure start time point of the IR pixel based on a fourth control line.

In this method, the four pixels may be independently exposed, thereby improving a light sensing effect of the image sensor.

In a possible implementation, the method further includes: controlling exposure time of the R pixel, the G pixel, and the B pixel to meet the preset ratio.

In a possible implementation, each pixel in the image sensor is coupled to a row coordinate control line and a column coordinate control line of the pixel, and each pixel corresponds to one branch of an exposure start control line. The method further includes: when control signals outputted by the row coordinate control line and the column coordinate control line of a target pixel are both at effective levels, outputting, by a branch of the exposure start control line corresponding to the target pixel, a control signal, and controlling an exposure start time point of the target pixel based on the control signal, where the target pixel is any pixel in the pixel array.

In this method, exposure time of each pixel may be separately controlled.

In a possible implementation, the method further includes: controlling, based on an exposure end control line, exposure end time points of all pixels in the pixel array.

FIG. 24 is a flowchart of an embodiment of a method for independently controlling exposure time according to this application. As shown in FIG. 24, the method is applied to a sensor including at least two types of pixels, where the at least two types of pixels include a first-type pixel and a second-type pixel. The method includes the following steps.

Step 2401: Control an exposure start time point of the first-type pixel based on a first control unit.

Step 2402: Control an exposure start time point of the second-type pixel based on a second control unit.

For example, the sensor may be an RGBIR sensor. Correspondingly, the first-type pixel is a large pixel corresponding to a visible light pixel, the visible light pixel includes an R pixel, a G pixel, and a B pixel, and the second-type pixel is a small pixel corresponding to an IR pixel. The image sensor may be an RGBW sensor. Correspondingly, the first-type pixel is a large pixel corresponding to a visible light pixel, the visible light pixel includes an R pixel, a G pixel, and a B pixel, and the second-type pixel is a small pixel corresponding to a W pixel. The first control unit and the second control unit are independent of each other. Therefore, exposure start time points of the first-type pixel and the second-type pixel are separately controlled. It should be understood that the first control unit and the second control unit may be implemented by a hardware logic circuit, or may be implemented by a software module that is run on a processor.

In a possible implementation, the at least two types of pixels further include a third-type pixel. The method further includes: controlling an exposure start time point of the third-type pixel based on a third control unit.

For example, the sensor may be an RCCB sensor. The first-type pixel is the R pixel, the second-type pixel is the B pixel, and the third-type pixel is a C pixel. The method specifically includes: controlling an exposure start time point of the R pixel based on the first control unit; controlling an exposure start time point of the B pixel based on the second control unit; and controlling an exposure start time point of the C pixel based on the third control unit.

In a possible implementation, the at least two types of pixels further include: the at least two types of pixels further include a third-type pixel and a fourth-type pixel. The method further includes:
controlling an exposure start time point of the third-type pixel based on the third control unit; and
controlling an exposure start time point of the fourth-type pixel based on the fourth control unit.

For example, the sensor is the RGBIR sensor, the first-type pixel is the R pixel, the second-type pixel is the G pixel, the third-type pixel is the B pixel, and the fourth-type pixel is the IR pixel. The method specifically includes: controlling an exposure start time point of the R pixel based on the first control unit; controlling an exposure start time point of the G pixel based on the second control unit; controlling an exposure start time point of the B pixel based on the third control unit; and controlling an exposure start time point of the IR pixel based on the fourth control unit. Alternatively, the sensor is an RGBW sensor, the first-type pixel is the R pixel, the second-type pixel is the G pixel, the third-type pixel is the B pixel, and the fourth-type pixel is the W pixel. The method specifically includes: controlling an exposure start time point of the R pixel based on the first control unit; controlling an exposure start time point of the G pixel based on the second control unit; controlling an exposure start time point of the B pixel based on the third control unit; and controlling an exposure start time point of the W pixel based on the fourth control unit.

Optionally, the method further includes: controlling exposure end time points of all pixels in the pixel array based on an exposure end control unit.

Optionally, the method further includes: controlling exposure time of each of the at least two types of pixels to meet the preset ratio.

For example, exposure time of the large pixel and the small pixel is controlled based on the first control unit and the second control unit, to meet the preset ratio. Alternatively, exposure time of the R pixel, the G pixel, the B pixel, and the IR pixel is controlled based on the first control unit, the second control unit, the third control unit, and the fourth control unit to meet the preset ratio. Alternatively, exposure time of the R pixel, the G pixel, the B pixel, and the W pixel is controlled based on the first control unit, the second control unit, the third control unit, and the fourth control unit to meet the preset ratio.

Exposure start time points of different types of pixels are separately controlled, and exposure end time points are uniformly controlled. Therefore, exposure time of different pixels may meet the preset ratio by setting exposure start time points of the pixels.

Optionally, the method further includes: transferring, based on a charge transfer control unit, charges accumulated by a photosensitive component to a charge readout module.

This application further provides a computer-readable storage medium. The computer-readable storage medium stores instructions. When the instructions are run on a computer or a processor, the computer or the processor is enabled to perform some or all steps in any method for independently controlling exposure provided in this application.

This application further provides a computer program product including instructions. When the computer program product is run on a computer or a processor, the computer or the processor is enabled to perform some or all steps in any method for independently controlling exposure provided in the embodiments of this application.

In an implementation process, steps of the foregoing method embodiments may be completed by using a hardware integrated logical circuit in the processor, or by using instructions in a form of software. The steps of the methods disclosed with reference to this application may be directly performed by a hardware encoding processor, or may be performed by using a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with the hardware of the processor.

A person of ordinary skill in the art may be aware that, units and algorithm steps in examples described with reference to embodiments disclosed in this specification can be implemented by electronic hardware or a combination of computer software and electronic hardware. Whether functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image sensor, comprising a red pixel, a green pixel, a blue pixel, and an invisible light pixel, wherein
the red pixel, the green pixel, and the blue pixel are large pixels, the invisible light pixel is a small pixel, and a light sensing area of the large pixel is greater than that of the small pixel; and
the red pixel, the green pixel, and the blue pixel are arranged in a Bayer format.

2. The sensor according to claim 1, wherein the invisible light pixel comprises an infrared pixel or a white pixel; the white pixel is used to sense white light; and the white light comprises red light, green light, blue light, and infrared light.

3. The sensor according to claim 1 or 2, wherein four large pixels surround one small pixel, and four small pixels surround one large pixel.

4. The sensor according to any one of claims 1 to 3, wherein areas of the large pixel and the small pixel are set based on crosstalk precision of the image sensor.

5. The sensor according to any one of claims 1 to 4, wherein the large pixel and the small pixel are regular polygons or circles.

6. The method according to any one of claims 1 to 5, wherein the red pixel, the green pixel, and the blue pixel correspond to an infrared cut-off filter layer; the infrared cut-off filter layer is configured to cut off an optical signal whose wavelength is greater than a first preset wavelength; and the optical signal whose wavelength is greater than the first preset wavelength comprises the infrared light.

7. The sensor according to any one of claims 1 to 6, further comprising: a light filter layer, wherein the light filter layer comprises a red filter layer, a green filter layer, and a blue filter layer;
each red pixel corresponds to one red filter layer, and the red filter layer is used to allow the red light and infrared light in a first wavelength range to pass through;
each green pixel corresponds to one green filter layer, and the green filter layer is used to allow the green light and infrared light in a second wavelength range to pass through;
each blue pixel corresponds to one blue filter layer, and the blue filter layer is used to allow the blue light and infrared light in a third wavelength range to pass through; wavelengths of the infrared light in the first wavelength range, the infrared light in the second wavelength range, and the infrared light in the third wavelength range are greater than the first preset wavelength;
when the invisible light pixel is the infrared pixel, the light filter layer further comprises an infrared filter layer; each infrared pixel corresponds to one infrared filter layer, and the infrared filter layer is used to allow infrared light in a specific wavelength range to pass through;
when the invisible light pixel is the white pixel, the light filter layer further comprises an all-pass filter layer or a dual-pass filter layer; each white pixel corresponds to one all-pass filter layer or one dual-pass filter layer, the all-pass filter layer is used to allow light in a full band range to pass through, and the dual-pass filter layer is used to allow the red light, the green light, the blue light, and infrared light in the specific wavelength range to pass through.

8. The sensor according to claim 6 or 7, wherein the infrared cut-off filter layer and/or the light filter layer are/is coated on a microlens of a corresponding pixel.

9. The sensor according to any one of claims 1 to 8, further comprising:
a logic control circuit, configured to separately control exposure time of the large pixel and the small pixel.

10. The sensor according to claim 9, wherein the logic control circuit comprises a first control line and a second control line; the large pixel is coupled to the first control line, and the small pixel is coupled to the second control line; and
the logic control circuit is specifically configured to: control an exposure start time point of the large pixel based on the first control line, and control an exposure start time point of the small pixel based on the second control line.

11. The sensor according to any one of claims 1 to 10, further comprising:
a light filter, configured to filter out ultraviolet light and infrared light whose wavelength is greater than a second preset wavelength, wherein the second preset wavelength is greater than the first preset wavelength and any wavelength that is in the specific wavelength range.

12. An image light sensing method, wherein the method is applied to an image sensor; the image sensor comprises a red pixel, a green pixel, a blue pixel, and an invisible light pixel, wherein the red pixel, the green pixel, and the blue pixel are large pixels, the invisible light pixel is a small pixel, and a light sensing area of the large pixel is greater than that of the small pixel; the red pixel, the green pixel, and the blue pixel are arranged in a Bayer format;
the method comprises:
sensing the red light based on the red pixel;
sensing the green light based on the green pixel;
sensing the blue light based on the blue pixel; and
sensing infrared light or white light based on the small pixel.

13. The method according to claim 12, wherein the invisible light pixel comprises an infrared pixel or a white pixel; the white pixel is used to sense white light; and the white light comprises red light, green light, blue light, and infrared light;
the method specifically comprises:
sensing the infrared light based on the infrared pixel, or sensing the white light based on the white pixel.

14. The method according to claim 12 or 13, wherein four large pixels surround one small pixel, and four small pixels surround one large pixel.

15. The method according to any one of claims 12 to 14, wherein areas of the large pixel and the small pixel are set based on crosstalk precision of the image sensor.

16. The method according to any one of claims 12 to 15, wherein the large pixel and the small pixel are regular polygons or circles.

17. The method according to any one of claims 12 to 16, wherein the image sensor further comprises an infrared cut-off filter layer; each large pixel corresponds to one infrared cut-off filter layer; the infrared cut-off filter layer is used to cut off an optical signal whose wavelength is greater than a first preset wavelength; and the optical signal whose wavelength is greater than the first preset wavelength comprises the infrared light; and
the method further comprises:
passing through, by light ray, the infrared cut-off filter layer to reach the large pixel.

18. The method according to claim 17, wherein the image sensor further comprises a light filter layer, wherein the light filter layer comprises a red filter layer, a green filter layer, and a blue filter layer; each red pixel corresponds to one red filter layer, and the red filter layer is used to allow the red light and infrared light in a first wavelength range to pass through; each green pixel corresponds to one green filter layer, and the green filter layer is used to allow the green light and infrared light in a second wavelength range to pass through; each blue pixel corresponds to one blue filter layer, and the blue filter layer is used to allow the blue light and infrared light in a third wavelength range to pass through; wavelengths of the infrared light in the first wavelength range, the infrared light in the second wavelength range, and the infrared light in the third wavelength range are greater than the first preset wavelength; when the invisible light pixel is the infrared pixel, the light filter layer further comprises an infrared filter layer; each infrared pixel corresponds to one infrared filter layer, and the infrared filter layer is used to allow infrared light in a specific wavelength range to pass through; when the invisible light pixel is the white pixel, the light filter layer further comprises an all-pass filter layer or a dual-pass filter layer; each white pixel corresponds to one all-pass filter layer or one dual-pass filter layer, the all-pass filter layer is used to allow light in a full band range to pass through, and the dual-pass filter layer is used to allow the red light, the green light, the blue light, and infrared light in the specific wavelength range to pass through; and
the method further comprises:
passing through, by the light ray, the infrared cut-off filter layer and the red filter layer to reach the red pixel;
passing through, by the light ray, the infrared cut-off filter layer and the green filter layer to reach the green pixel;
passing through, by the light ray, the infrared cut-off filter layer and the blue filter layer to reach the blue pixel;
passing through, by the light ray, the infrared filter layer to reach the infrared pixel; or passing through, by the light ray, the all-pass filter layer or the dual-pass filter layer to reach the white pixel.

19. The method according to any one of claims 12 to 18, wherein the image sensor further comprises a logic control circuit; the logic control circuit comprises a first control line and a second control line; the large pixel is coupled to the first control line, and the small pixel is coupled to the second control line; and
the method further comprises:
controlling an exposure start time point of the red pixel based on the first control line; and
controlling an exposure start time point of the green pixel based on the second control line.
